# EUROPEAN PATENT APPLICATION

(11) **EP 3 264 576 A1**
(43) Date of publication of application: **03.01.2018**
(21) Application number: 16755446.8
(22) Date of filing: 23.02.2016
(51) Int. Cl.: H02K 49/02, H02K 49/10

(54) **EDDY-CURRENT HEATER**

(30) Priority: 24.02.2015 JP 2015033606
(71) Applicant: Nippon Steel & Sumitomo Metal Corporation, Tokyo 100-8071 (JP)
(72) Inventor: IMANISHI, Kenji, Tokyo 100-8071 (JP); SETO, Atsushi, Tokyo 100-8071 (JP); NOGAMI, Hiroshi, Tokyo 100-8071 (JP); NAKAYAMA, Eisuke, Tokyo 100-8071 (JP); YAMAGUCHI, Hiroyuki, Tokyo 100-8071 (JP)
(74) Representative: Zimmermann & Partner Patentanwälte mbB
(86) International application number: PCT/JP2016/055159
(87) International publication number: WO 2016/136702

(57) **Abstract**

A heat generating apparatus (1) includes a rotary shaft (3), a heat generating drum (4A), a plurality of permanent magnets (5), a magnet holding ring (6), a switching mechanism, and a heat recovery system. The rotary shaft (3) is rotatably supported by a non-rotative body (2). The heat generating drum (4A) is fixed to the rotary shaft (3). The magnets (5) face the inner peripheral surface of the heat generating drum (4A) with a gap. The magnets (5) are arrayed in a circumferential direction along the circumference of the rotary shaft (3) throughout the whole circumference such that magnetic pole arrangements of circumferentially adjacent ones of the permanent magnets are opposite to each other. The magnet holding ring (6A) holds the magnets (5). The switching mechanism switches between a state to generate magnetic circuits between the magnets (5) and the heat generating drum (4A) and a state to generate no magnetic circuits between the magnets (5) and the heat generating drum (4A). The heat recovery system collects heat generated in the heat generating drum (4A). Thereby, thermal energy can be recovered from the kinetic energy of the rotary shaft efficiently.

## Description

### TECHNICAL FIELD

The present invention relates to a heat generating apparatus that recovers thermal energy from kinetic energy of a rotary shaft (rotational energy), and more particularly to an eddy current heat generating apparatus employing permanent magnets (hereinafter referred to simply as "magnets") and utilizing eddy currents generated by the effects of magnetic fields of the magnets.

### BACKGROUND ART

In recent years, generation of carbon dioxide accompanying burning of fossil fuels is acknowledged as a problem. Therefore, utilization of natural energy, such as solar thermal energy, wind energy, hydro-energy and the like, is promoted. Among the natural energy, wind energy and hydro-energy are kinetic energy of a fluid. Conventionally, electric power has been generated from kinetic energy of a fluid.

For example, in a typical wind electric generating facility, a propeller receives wind and thereby rotates. The rotary shaft of the propeller is connected to the input shaft of a power generator, and along with the rotation of the propeller, the input shaft of the power generator rotates. Thereby, electric power is generated in the power generator. In short, in a typical wind electric generating facility, wind energy is converted to kinetic energy of the rotary shaft of a propeller, and the kinetic energy of the rotary shaft is converted to electric energy.

Japanese Patent Application Publication No. 2011-89492 (Patent Literature 1) suggests a wind electric generating facility with improved energy use efficiency. The electric generating facility disclosed in Patent Literature 1 includes a heat generator (retarder 30 in Patent Literature 1) that generates thermal energy in the process of converting wind energy to electric energy.

In the wind electric generating facility disclosed in Patent Literature 1, wind energy is converted to kinetic energy of the rotary shaft of a propeller, and the kinetic energy of the propeller is converted to hydraulic energy of a hydraulic pump. The hydraulic energy rotates a hydraulic motor. The spindle of the hydraulic motor is connected to the rotary shaft of the heat generator, and the rotary shaft of the heat generator is connected to the input shaft of a power generator. Along with rotation of the hydraulic motor, the rotary shaft of the heat generator rotates, and the input shaft of the power generator rotates, whereby electricity is generated in the power generator.

The heat generator utilizes eddy currents generated by the effects of magnetic fields of permanent magnets to reduce the rotational speed of the rotary shaft of the heat generator. Accordingly, the rotational speed of the spindle of the hydraulic motor is reduced, and the rotational speed of the propeller is adjusted via the hydraulic pump.

In the heat generator, the generation of eddy currents leads to generation of braking force to reduce the rotational speed of the rotary shaft of the heat generator, and generation of heat as well. Thus, a part of wind energy is converted to thermal energy. According to Patent Literature 1, the heat (thermal energy) is collected in a heat storage device, and the motor is driven by the collected thermal energy, whereby the power generator is driven. Consequently, electricity is generated in the power generator.

### CITATION LIST

### PATENT LITERATURE

Patent Literature 1: Japanese Patent Application Publication No. 2011-89492

### SUMMARY OF INVENTION

### TECHNICAL PROBLEMS

The wind electric generating facility disclosed in Patent Literature 1 includes a hydraulic pump and a hydraulic motor between a propeller that is a rotary shaft and a heat generator. Thus, the structure of the facility is complicated. Also, multistage energy conversion is necessary, and a large energy loss is caused during the energy conversion. Accordingly, the thermal energy obtained in the heat generator is small.

In the heat generator disclosed in Patent Literature 1, a plurality of magnets are circumferentially arrayed to face the whole circumference of the inner peripheral surface of a cylindrical rotor. The magnetic poles (the north pole and the south pole) of each of the magnets are circumferentially arranged, and the magnetic pole arrangements of adjacent ones of the circumferentially arrayed magnets are the same. Therefore, the magnetic fields of the magnets do not spread, and the magnetic flux density reaching the rotor is low. Then, the eddy currents generated in the rotor by the effects of magnetic fields of the magnets are low, and it is not possible to achieve sufficient heat generation.

The present invention has been made in view of the current situation described above. An object of the present invention is to provide an eddy current heat generating apparatus that is capable of efficiently recovering thermal energy from kinetic energy of a rotary shaft (rotational energy).

### SOLUTION TO PROBLEMS

An eddy current heat generating apparatus according to an embodiment of the present invention includes:
a rotary shaft rotatably supported by a non-rotative member;
a cylindrical heat generator fixed to the rotary shaft;
a plurality of permanent magnets arrayed in a circumferential direction along a circumference of the rotary shaft to face an outer peripheral surface or an inner peripheral surface of the heat generator with a gap such that magnetic pole arrangements of circumferentially adjacent ones of the permanent magnets are opposite to each other;
a cylindrical magnet holder holding the permanent magnets;
a switching mechanism that switches between a state to generate magnetic circuits between the permanent magnets and the heat generator and a state to generate no magnetic circuits between the permanent magnets and the heat generator; and
a heat recovery system collecting heat generated in the heat generator.

### ADVANTAGE EFFECTS OF INVENITON

In the eddy current heat generating apparatus according to the present invention, thermal energy can be recovered from kinetic energy of a rotary shaft efficiently.

### BRIEF DESCRIPTION OF DRAWINGS

[FIG.1] FIG. 1 is a longitudinal sectional view of a heat generating apparatus according to a first embodiment.
[FIG.2] FIG. 2 is a perspective view showing the arrangement of magnets in the heat generating apparatus according to the first embodiment.
[FIG. 3A] FIG. 3A is a longitudinal sectional view showing a state where magnetic circuits are generated between the magnets and a heat generator by operation of a switching mechanism in the heat generating apparatus according to the first embodiment.
[FIG. 3B] FIG. 3B is a cross-sectional view showing the state where magnetic circuits are generated between the magnets and the heat generator by operation of the switching mechanism in the heat generating apparatus according to the first embodiment.
[FIG. 4A] FIG. 4A is a longitudinal sectional view showing a state where no magnetic circuits are generated between the magnets and the heat generator by operation of the switching mechanism in the heat generating apparatus according to the first embodiment.
[FIG. 4B] FIG. 4B is a cross-sectional view showing the state where no magnetic circuits are generated between the magnets and the heat generator by operation of the switching mechanism in the heat generating apparatus according to the first embodiment.
[FIG. 5] FIG. 5 is a cross-sectional view of a preferred example of the heat generator of the heat generating apparatus according to the first embodiment.
[FIG. 6] FIG. 6 is a perspective view showing the arrangement of magnets in a heat generating apparatus according to a second embodiment.
[FIG. 7] FIG. 7 is a cross-sectional view showing a state where magnetic circuits are generated between the magnets and a heat generator by operation of a switching mechanism in the heat generating apparatus according to the second embodiment.
[FIG. 8] FIG. 8 is a cross-sectional view showing a state where no magnetic circuits are generated between the magnets and the heat generator by operation of the switching mechanism in the heat generating apparatus according to the second embodiment.
[FIG. 9] FIG. 9 is a perspective view showing the arrangement of magnets in a heat generating apparatus according to a third embodiment.
[FIG. 10] FIG. 10 is a cross-sectional view showing a state where magnetic circuits are generated between the magnets and a heat generator by operation of a switching mechanism in the heat generating apparatus according to the third embodiment.
[FIG. 11] FIG. 11 is a cross-sectional view showing a state where no magnetic circuits are generated between the magnets and the heat generator by operation of the switching mechanism in the heat generating apparatus according to the third embodiment.
[FIG. 12] FIG. 12 is a cross-sectional view showing a state where magnetic circuits are generated between magnets and a heat generator by operation of a switching mechanism in a heat generating apparatus according to a fourth embodiment.
[FIG. 13] FIG. 13 is a cross-sectional view showing a state where no magnetic circuits are generated between the magnets and the heat generator by operation of the switching mechanism in the heat generating apparatus according to the fourth embodiment.
[FIG. 14] FIG. 14 is a perspective view showing the arrangement of magnets in a heat generating apparatus according to a fifth embodiment.
[FIG. 15A] FIG. 15A is a longitudinal sectional view showing a state where magnetic circuits are generated between the magnets and a heat generator by operation of a switching mechanism in the heat generating apparatus according to the fifth embodiment.
[FIG. 15B] FIG. 15B is a cross-sectional view showing the state where magnetic circuits are generated between the magnets and the heat generator by operation of the switching mechanism in the heat generating apparatus according to the fifth embodiment.
[FIG. 16A] FIG. 16A is a longitudinal sectional view showing a state where no magnetic circuits are generated between the magnets and the heat generator by operation of the switching mechanism in the heat generating apparatus according to the fifth embodiment.
[FIG. 16B] FIG. 16B is a cross-sectional view showing the state where no magnetic circuits are generated between the magnets and the heat generator by operation of the switching mechanism in the heat generating apparatus according to the fifth embodiment.
[FIG. 17] FIG. 17 is a perspective view showing the arrangement of magnets in a heat generating apparatus according to a sixth embodiment.
[FIG. 18A] FIG. 18A is a sectional view along a circumference showing a state where magnetic circuits are generated between the magnets and a heat generator by operation of a switching mechanism in the heat generating apparatus according to the sixth embodiment.
[FIG. 18B] FIG. 18B is a cross-sectional view showing the state where magnetic circuits are generated between the magnets and the heat generator by operation of the switching mechanism in the heat generating apparatus according to the sixth embodiment.
[FIG. 19A] FIG. 19A is a sectional view along the circumference showing a state where no magnetic circuits are generated between the magnets and the heat generator by operation of the switching mechanism in the heat generating apparatus according to the sixth embodiment.
[FIG. 19B] FIG. 19B is a cross-sectional view showing the state where no magnetic circuits are generated between the magnets and the heat generator by operation of the switching mechanism in the heat generating apparatus according to the sixth embodiment.
[FIG. 20] FIG. 20 is a perspective view showing the arrangement of magnets in a heat generating apparatus according to a seventh embodiment.
[FIG. 21A] FIG. 21A is a sectional view along a circumference showing a state where magnetic circuits are generated between the magnets and a heat generator by operation of a switching mechanism in the heat generating apparatus according to the seventh embodiment.
[FIG. 21B] FIG. 21B is a longitudinal sectional view showing the state where magnetic circuits are generated between the magnets and the heat generator by operation of the switching mechanism in the heat generating apparatus according to the seventh embodiment.
[FIG. 21C] FIG. 21C is a cross-sectional view showing the state where magnetic circuits are generated between the magnets and the heat generator by operation of the switching mechanism in the heat generating apparatus according to the seventh embodiment.
[FIG. 22A] FIG. 22A is a sectional view along the circumference showing a state where no magnetic circuits are generated between the magnets and the heat generator by operation of the switching mechanism in the heat generating apparatus according to the seventh embodiment.
[FIG. 22B] FIG. 22B is a longitudinal sectional view showing the state where no magnetic circuits are generated between the magnets and the heat generator by operation of the switching mechanism in the heat generating apparatus according to the seventh embodiment.
[FIG. 22C] FIG. 22C is a cross-sectional view showing the state where no magnetic circuits are generated between the magnets and the heat generator by operation of the switching mechanism in the heat generating apparatus according to the seventh embodiment.
[FIG. 23] FIG. 23 is a perspective view showing the arrangement of magnets in a heat generating apparatus according to an eighth embodiment.
[FIG. 24A] FIG. 24A is a sectional view along a circumference showing a state where magnetic circuits are generated between the magnets and a heat generator by operation of a switching mechanism in the heat generating apparatus according to the eighth embodiment.
[FIG. 24B] FIG. 24B is a cross-sectional view showing the state where magnetic circuits are generated between the magnets and the heat generator by operation of the switching mechanism in the heat generating apparatus according to the eighth embodiment.
[FIG. 25A] FIG. 25A is a sectional view along the circumference showing a state where no magnetic circuits are generated between the magnets and the heat generator by operation of the switching mechanism in the heat generating apparatus according to the eighth embodiment.
[FIG. 25B] FIG. 25B is a cross-sectional view showing the state where no magnetic circuits are generated between the magnets and the heat generator by operation of the switching mechanism in the heat generating apparatus according to the eighth embodiment.
[FIG. 26] FIG. 26 is a perspective view showing the arrangement of magnets in a heat generating apparatus according to a ninth embodiment.
[FIG. 27A] FIG. 27A is a sectional view along a circumference showing a state where magnetic circuits are generated between the magnets and a heat generator by operation of a switching mechanism in the heat generating apparatus according to the ninth embodiment.
[FIG. 27B] FIG. 27B is a longitudinal sectional view showing the state where magnetic circuits are generated between the magnets and the heat generator by operation of the switching mechanism in the heat generating apparatus according to the ninth embodiment.
[FIG. 27C] FIG. 27C is a cross-sectional view showing the state where magnetic circuits are generated between the magnets and the heat generator by operation of the switching mechanism in the heat generating apparatus according to the ninth embodiment.
[FIG. 28A] FIG. 28A is a sectional view along the circumference showing a state where no magnetic circuits are generated between the magnets and the heat generator by operation of the switching mechanism in the heat generating apparatus according to the ninth embodiment.
[FIG. 28B] FIG. 28B is a longitudinal sectional view showing the state where no magnetic circuits are generated between the magnets and the heat generator by operation of the switching mechanism in the heat generating apparatus according to the ninth embodiment.
[FIG. 28C] FIG. 28C is a cross-sectional view showing the state where no magnetic circuits are generated between the magnets and the heat generator by operation of the switching mechanism in the heat generating apparatus according to the ninth embodiment.

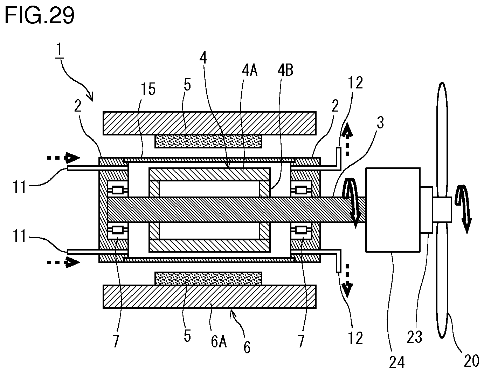

[FIG. 29] FIG. 29 is a longitudinal sectional view of a modification of the heat generating apparatuses according to the above embodiments.

### EMBODIMENTS OF INVENTION

An eddy current heat generating apparatus according to an embodiment of the present invention includes a rotary shaft, a heat generator, a plurality of permanent magnets, a magnet holder, a switching mechanism, and a heat recovery system. The rotary shaft is rotatably supported by a non-rotative member. The heat generator is cylindrical and is fixed to the rotary shaft. The plurality of permanent magnets are arrayed to face the outer peripheral surface or the inner peripheral surface of the heat generator with a gap. These magnets are arrayed in a circumferential direction along the circumference of the rotary shaft such that the magnetic pole arrangements of circumferentially adjacent ones of the magnets are opposite to each other. The magnet holder is cylindrical and holds the magnets. The switching mechanism switches between a state to generate magnetic fields between the magnets and the heat generator and a state to generate no magnetic fields between the magnets and the heat generator. The heat recovery system collects heat generated in the heat generator.

In the eddy current heat generating apparatus according to the embodiment, when magnetic circuits are generated between the magnets and the heat generator by operation of the switching mechanism, since the magnetic pole arrangements of adjacent ones of the magnets arrayed to face the heat generator are opposite to each other, the magnetic fields of the magnets spread out, and the magnetic flux density reaching the heat generator becomes high. Accordingly, the eddy currents generated in the heat generator by the effects of magnetic fields of the magnets are high, thereby resulting in achievement of sufficient heat generation. Thus, thermal energy can be recovered from the kinetic energy of the rotary shaft efficiently. It is possible to adjust the magnetic flux density from the magnets to the heat generator by controlling the degree of action of the switching mechanism. This allows for adjustment of the amount of heat generation of the heat generator, thereby leading to adjustment of the amount of recovered heat.

In the heat generating apparatus described above, for example, the following three ways of arrangement (a) to (c) are employable as the magnetic pole arrangement of each of the magnets.
(a) Each of the magnets is laid such that the magnetic poles thereof are arranged in a radial direction from the axis of the rotary shaft. In this case, the magnet holder is ferromagnetic. This way of arrangement will hereinafter be referred to as "radial magnetic pole arrangement".
(b) Each of the magnets is laid such that the magnetic poles thereof are arranged in a circumferential direction along the circumference of the rotary shaft. Pole pieces are provided between the circumferentially arrayed magnets. In this case, the magnetic holder is non-magnetic. This way of arrangement will hereinafter be referred to as "circumferential magnetic pole arrangement".
(c) The magnets include primary magnets, and secondary magnets disposed between the circumferentially arrayed primary magnets. Each of the primary magnets is laid such that the magnetic poles thereof are arranged in the radial direction from the axis of the rotary shaft. Each of the secondary magnets is laid such that the magnetic poles thereof are arranged in the circumferential direction along the circumference of the rotary shaft. In this case, the magnet holder is ferromagnetic. This way of arrangement will hereinafter be referred to as "two-directional magnetic pole arrangement".

In a case in which the radial magnetic pole arrangement is employed in the heat generating apparatus, the magnetic holder may be configured to be movable along the axis of the rotary shaft to serve as the switching mechanism. The switching mechanism having such a configuration will hereinafter be referred to as "axial motion switching mechanism". The axial motion switching mechanism can be used not only in the case in which the radial magnetic pole arrangement is employed in the heat generating apparatus but also in a case in which the two-directional magnetic pole arrangement is employed in the heat generating apparatus.

In the case in which the radial magnetic pole arrangement is employed in the heat generating apparatus, the switching mechanism may be configured as follows. In the gap between the heat generator and the magnets, a plurality of ferromagnetic plate-shaped switches are arrayed in the circumferential direction along the circumference of the rotary shaft. The placement angles of these switches are the same as the placement angles of the magnets. Either the magnet holder or the array of switches is rotatable around the rotary shaft. The switching mechanism having such a configuration will hereinafter be referred to as "single-row rotation switching mechanism".

In the case in which the radial magnetic pole arrangement is employed in the heat generating apparatus, the switching mechanism may be configured as follows. The array of magnets is divided into two rows (a first row and a second row), each of the rows extending in the circumferential direction along the circumference of the rotary shaft, and the magnet holder is divided into two sections for the respective rows. In the gap between the heat generator and the magnets, a plurality of ferromagnetic plate-shaped switches are arrayed in the circumferential direction along the circumference of the rotary shaft. The placement angles of these switches are the same as the placement angles of the magnets. Either of the sections of the magnet holder for the first row or the second row is rotatable around the rotary shaft. The switching mechanism having such a configuration will hereinafter be referred to as "two-row rotation switching mechanism".

In a case in which the circumferential magnetic pole arrangement is employed in the heat generating apparatus, the two-row rotation switching mechanism can be used. In this case, the above-described plate-shaped switches are not necessary.

In the case in which the circumferential magnetic pole arrangement is employed in the heat generating apparatus, the switching mechanism may be configured as follows. The array of magnets is divided into three rows (a first row, a second row and a third row in this order), each of the rows extending in the circumferential direction along the circumference of the rotary shaft, and the magnet holder is divided into three sections for the respective rows. Either the sections of the magnetic holder for the first and the third rows or the section of the magnetic holder for the second row is rotatable around the rotary shaft. The switching mechanism having such a configuration will hereinafter be referred to as "three-row rotation switching mechanism".

The two-row rotation switching mechanism and the three-row rotation switching mechanism can be used also in a case in which the two-directional magnetic pole arrangement is employed in the heat generating apparatus. In this case, the plate-shaped switches are disposed in the gap between the heat generator and the primary magnets. The placement angles of the switches are the same as the placement angles of the primary magnets.

In the heat generating apparatus, the heat recovery system may include a closed container, pipes, a heat storage device, and a heat medium. The closed container is fixed to a non-rotative member and surrounds the heat generator. The closed container includes a non-magnetic partition wall located in the gap between the heat generator and the magnets. The pipes are connected to an inlet and an outlet, respectively, which lead to the internal space of the closed container. The heat storage device is connected to the pipes. The heat medium circulates in the closed container, the pipes and the heat storage device.

The above-described heat generating apparatus can be mounted in a power-generating facility utilizing kinetic energy of a fluid (for example, natural energy such as wind power, water power or the like), such as a wind electric generating facility, a hydroelectric generating facility or the like. For example, by replacing the power-generating apparatus of a conventional wind electric generating facility or a conventional hydroelectric generating facility with the above-described heat generating apparatus, it becomes possible to generate thermal energy in the facility. Thus, the structure of a conventional power generating facility can be applied to the components of the facility except the heat generating apparatus. The heat generating apparatus can be mounted in a vehicle. In either case, the heat generating apparatus recovers thermal energy from the kinetic energy of the rotary shaft. The collected thermal energy is used, for example, to generate electric energy.

Eddy current heat generating apparatuses according to some embodiments of the present invention will hereinafter be described.

### [First Embodiment]

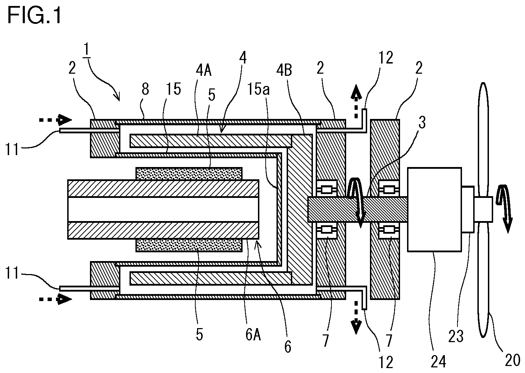

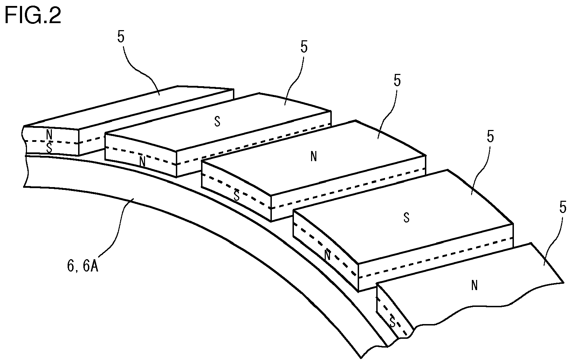

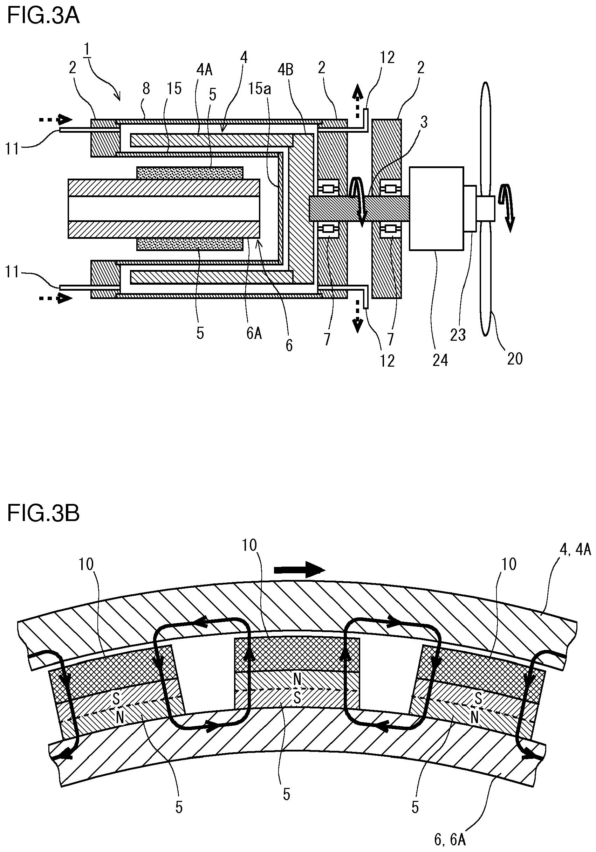

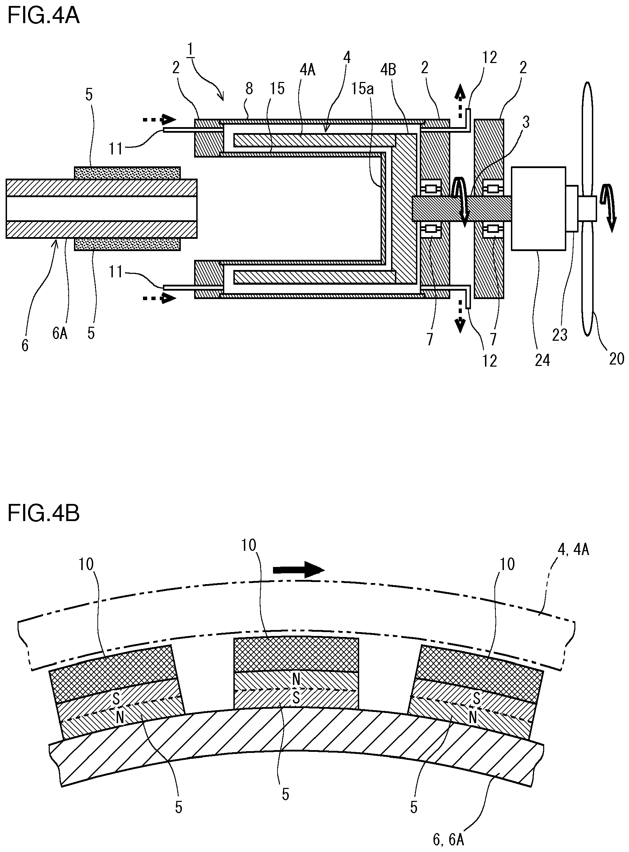

FIG. 1 is a longitudinal sectional view of a heat generating apparatus according to a first embodiment. FIG. 2 is a perspective view showing the arrangement of magnets in the heat generating apparatus. FIGS. 3A and 3B are views showing a state where magnetic circuits are generated between the magnets and a heat generator by operation of a switching mechanism in the heat generating apparatus. FIGS. 4A and 4B are views showing a state where no magnetic circuits are generated between the magnets and the heat generator by operation of the switching mechanism in the heat generating apparatus. FIGS. 3A and 4A are longitudinal sectional views of the heat generating apparatus, and FIGS. 3B and 4B are cross-sectional views showing the status of generation of magnetic circuits. In this specification, a longitudinal sectional view means a sectional view along the axis of rotation. A cross-sectional view means a sectional view in a direction perpendicular to the axis of rotation. FIGS. 1 to 4B illustrate a case in which the heat generating apparatus 1 is mounted in a wind electric generating facility.

As shown in FIG. 1, the heat generating apparatus 1 according to the first embodiment includes a rotary shaft 3, a heat generator 4, a plurality of permanent magnets 5, and a magnet holder 6. The rotary shaft 3 is rotatably supported by a non-rotative fixed body 2 via a bearing 7.

The heat generator 4 is fixed to the rotary shaft 3. The heat generator 4 includes a cylindrical heat generating drum 4A that is coaxial with the rotary shaft 3, and a disk-shaped connection member 4B connecting the front edge (right edge in FIG. 1) of the heat generating drum 4A and the rear edge (left edge in FIG. 1) of the rotary shaft 3. For weight reduction and heat recovery, a plurality of through holes (not shown in the drawings) are made in the connection member 4B. The magnet holder 6 is disposed inside the heat generator 4, and includes a magnet holding ring 6A having an axis that is an extended line of the axis of the rotary shaft 3. The magnet holding ring 6A holds the magnets 5.

The magnets 5 are fixed on the outer peripheral surface of the magnet holding ring 6A, and face the inner peripheral surface of the heating drum 4A with a gap. In this regard, as shown in FIGS. 2, 3B and 4B, the magnets 5 are circumferentially arrayed throughout the whole circumference. Each of the magnets 5 is laid such that the magnetic poles (the north pole and the south pole) thereof are arranged in a radial direction from the axis of the rotary shaft 3, and the magnetic pole arrangements of circumferentially adjacent ones of the magnets 5 are opposite to each other. In the first embodiment, the magnet holding ring 6A that directly holds the magnets 5 is made of a ferromagnetic material (for example, a ferromagnetic metal material such as carbon steel, cast iron or the like). In short, the heat generating apparatus 1 according to the first embodiment employs the radial magnetic pole arrangement.

In the case shown by FIGS. 3B and 4B, on top of the magnets 5, pole pieces 10 are fixed, but the pole pieces 10 are dispensable. A partition wall 15 (see FIG. 1) is interposed between the array of magnets 5 and the heat generating drum 4A as will be described below, but in FIGS. 3B and 4B, the partition wall 15 is omitted.

The heat generator 4, and especially the inner surface layer of the heat generating drum 4A facing the magnets 5, is made of a conductive material. The conductive material may be a ferromagnetic metal material (for example, carbon steel, cast iron or the like), a feebly magnetic material (for example, ferrite stainless steel or the like), or a non-magnetic material (for example, an aluminum alloy, austenite stainless steel, a copper alloy or the like).

Also, as shown in FIG. 1, a cylindrical cover 8 is disposed outside the heat generating drum 4A to surround the heat generating drum 4A entirely. Both edges of the cover 8 are fixed to the body 2. In the gap between the heat generating drum 4A and the magnets 5, a cylindrical partition wall 15 is disposed. The front edge (right edge in FIG. 1) of the partition wall 15 is closed by a disk 15a. The rear edge (left edge in FIG. 2) of the partition wall 15 is fixed to the body 2. The body 2, the cover 8 and the partition wall 15 (including the disk 15a) form a closed container surrounding the heat generator 4 (heat generating drum 4A).

The partition wall 15 is made of a non-magnetic material (for example, an aluminum alloy, austenite stainless steel, a copper alloy, heat-resistant resin or ceramics). This is to avoid influencing the magnetic fields of the magnets 5 spreading to the heat generator 4. The surface of the partition wall 15 facing the heat generating drum 4A may be a mirror surface with a high degree of smoothness. This suppresses heat transfer from the heat generating drum 4A to the magnets 5.

The heat generating apparatus 1 according to the first embodiment includes an axial motion switching mechanism as the switching mechanism that switches between a state to generate magnetic circuits between the magnets 5 and the heat generator 4 and a state to generate no magnetic circuits between the magnets 5 and the heat generator 4. Specifically, the magnet holding ring 6A holding the magnets 5 is configured to be movable along the axis of the rotary shaft 3. For example, a drive source (not shown in the drawings) such as an air cylinder, an electric actuator or the like is connected to the magnet holding ring 6A. By operation of the drive source, the magnet holding ring 6A and the magnets 5 are moved together forward or backward in the axial direction. Thereby, the magnets 5 can be put into a state to lie inside the heat generating drum 4A (see FIG. 3A) and a state to lie outside the heat generating drum 4A (see FIG. 4A). Further, by controlling the degree of action of the drive source, the magnets 5 can be put into a state to lie partly in the heat generating drum 4A.

When the rotary shaft 3 rotates, the heat generating drum 4A rotates together with the rotary shaft 3 (see the outlined arrows in FIGS. 1, 3A and 4A and the thick black arrows in FIGS. 3B and 4B). Thereby, a relative rotational speed difference occurs between the magnets 5 and the heat generating drum 4A.

In this state, when the magnets 5 are taken out of the heat generating drum 4A by operation of the axial motion switching mechanism as shown in FIGS. 4A and 4B, the magnets 5 are separated away from the inner peripheral surface of the heat generating drum 4A. In other words, the magnets 5 are put into a state not to face the inner peripheral surface of the heat generating drum 4A. Therefore, the magnetic fluxes from the magnets (magnetic fields of the magnets) do not reach the heat generating drum 4A. Accordingly, no magnetic circuits are generated between the magnets 5 and the heat generating drum 4A. In this case, no eddy current occurs on the inner peripheral surface of the heat generating drum 4A. Then, neither braking force nor heat is generated in the heat generating drum 4A rotating together with the rotary shaft 3.

On the other hand, when the magnets 5 are placed in the heat generating drum 4A by operation of the axial motion switching mechanism as shown in FIGS. 3A and 3B, the magnets 5 are positioned to be concentric with the inner peripheral surface of the heat generating drum 4A. In other words, the magnets 5 are put into a state to face the inner peripheral surface of the heat generating drum 4A. At this time, as shown in FIGS. 2, 3B and 4B, each of the magnets 5 facing the inner peripheral surface of the heat generating drum 4A is laid such that the magnetic poles (the north pole and the south pole) thereof are arranged in the radial direction from the axis of the rotary shaft 3, and the magnetic pole arrangements of circumferentially adjacent ones of the magnets 5 are opposite to each other. The magnet holding ring 6A holding the magnets 5 is ferromagnetic.

Therefore, the magnetic fluxes from the magnets (magnetic fields of the magnets) are as follows (see the solid arrows in FIG. 3B). As shown in FIG. 3B, with regard to a first magnet 5 and a second magnet 5 that are adjacent to each other, the magnetic flux outgoing from the north pole of the first magnet 5 through the pole piece 10 fixed thereon reaches the heat generating drum 4A facing the first magnet 5. The magnetic flux that has reached the heat generating drum 4A reaches the south pole of the second magnet 5 through the pole piece 10 fixed thereon. The magnetic flux outgoing from the north pole of the second magnet 5 reaches the south pole of the first magnet 5 via the magnet holding ring 6A. Thus, the circumferentially adjacent magnets 5 form a magnetic circuit across the adjacent magnets 5, the magnet holding ring 6A holding the magnets 5, and the heat generating drum 4A. Such magnetic circuits are formed throughout the whole circumference such that adjacent magnetic fluxes are in opposite directions. Then, the magnetic fields of the magnets 5 spread out, and the magnetic flux density reaching the heat generating ring 4A becomes high.

In a state where there is a relative rotational speed difference between the magnets 5 and the heat generating drum 4A, when the magnetic fields of the magnets 5 act on the heat generating drum 4A, eddy currents are generated along the inner peripheral surface of the heat generating drum 4A. Interactions between the eddy currents and the magnetic flux density from the magnets 5 cause braking force acting on the heat generating drum 4A (heat generator 4), which is rotating together with the rotary shaft 3, in the reverse direction to the rotational direction, according to Fleming's left-hand rule.

The generation of eddy currents causes heat generation of the heat generating drum 4A along with the generation of braking force. As described above, the magnetic flux density reaching the heat generating drum 4A is high, and therefore, the eddy currents generated in the heat generating drum 4A by the effects of magnetic fields of the magnets 5 are high, thereby resulting in achievement of sufficient heat generation.

The heat generating apparatus 1 includes a heat recovery system to collect and utilize the heat generated in the heat generating drum 4A (heat generator 4). In the first embodiment, the heat recovery system includes an inlet 11 and an outlet 12 made in the body 2 that forms a closed container together with the cover 8, the partition wall 15. The inlet 11 and the outlet 12 lead to the internal space of the closed container, that is, the space where the heat generating drum 4A lies (the space hereinafter being referred to as "heat generator lying space"). An inlet pipe and an outlet pipe are connected to the inlet 11 and the outlet 12, respectively, that lead to the heat generator lying space though they are not shown in the drawings. The inlet pipe and the outlet pipe are connected to a heat storage device, which is not shown in the drawings. The heat generator lying space (internal space of the closed container), the inlet pipe, the outlet pipe and the heat storage device form a pathway, and a heat medium flows and circulates in the pathway (see the dotted arrows in FIGS. 1 and 3A).

The heat medium is, for example, nitrate-based molten salt (for example, mixed salt of sodium nitrate: 60% and potassium nitrate: 40%). Alternatively, heat medium oil, water (steam), air, supercritical CO₂ or the like may be used as the heat medium.

The heat generated in the heat generating drum 4A is transferred to the heat medium flowing in the heat generator lying space. The heat medium in the heat generator lying space is discharged therefrom through the outlet 12, and led to the heat storage device via the outlet pipe. The heat storage device receives heat from the heat medium by heat exchange, and stores the heat therein. The heat medium that has passed through the heat storage device flows into the inlet pipe, and returns to the heat generator lying space through the inlet 11. In this way, the heat generated in the heat generating drum 4A is collected.

In the heat generating apparatus 1 according to the first embodiment, as described above, sufficient heat generation is achieved by the heat generating drum 4A. Therefore, it is possible to recover thermal energy from kinetic energy of the rotary shaft 3 efficiently.

Moreover, when the degree of action of the axial motion switching mechanism is controlled to place part of the magnets 5 inside the heat generating drum 4A, the magnetic flux density of the magnets 5 reaching the heat generating drum 4A is different from that when the magnets 5 are entirely placed inside the heat generating drum 4A. Thus, controlling the degree of action of the axial motion switching mechanism allows for adjustment of the amount of heat generation in the heat generating drum 4A, thereby resulting in adjustment of the amount of collected heat. The control of the degree of action of the switching mechanism is carried out under an order from a control unit (not shown) to maintain a constant amount of collected heat, for example. Specifically, the control unit detects the number of rotations of the rotary shaft 3 by a rotary encoder or any other sensor, and controls the degree of action of the switching mechanism depending on the detected number of rotations. For example, when the number of rotations of the rotary shaft 3 decreases, the control unit controls the switching mechanism so that the magnetic flux density from the magnets 5 to the heat generating drum 4A will be higher. When the number of rotations of the rotary shaft 3 increases, the control unit controls the switching mechanism so that the magnet flux density from the magnets 5 to the heat generating drum 4A will be lower.

Switching to the state to generate no magnetic circuits between the magnets 5 and the heat generating drum 4A is carried out under an order from a control unit (not shown) when the amount of heat stored in the heat storage device has reached the capacity, for example. Specifically, the control unit detects the temperature inside the heat storage device, and judges from the detected temperature whether or not the amount of heat stored therein has reached the capacity. When the amount of stored heat has reached the capacity, the control unit controls the switching mechanism so that no magnetic circuits will be generated between the magnets 5 and the heat generating drum 4A. Thereafter, when the amount of heat stored in the heat storage device falls below the capacity along with consumption of heat stored therein, the control unit controls the switching mechanism so that magnetic circuits will be generated between the magnets 5 and the heat generating drum 4A.

The heat generating apparatus 1 according to the first embodiment is mounted in a wind electric generating facility. As shown in FIG. 1, a propeller 20, which is a windmill, is disposed on an extended line of the rotary shaft 3 of the heat generating apparatus 1. The rotary shaft of the propeller 20 is connected to the rotary shaft 3 of the heat generating apparatus 1 via a clutch 23 and an accelerator 24. Rotation of the propeller 20 is accompanied by rotation of the rotary shaft 3 of the heat generating apparatus 1. In this regard, the rotational speed of the rotary shaft 3 of the heat generating apparatus 1 is increased by the accelerator 24 above the rotational speed of the propeller 20. As the accelerator 24, for example, a planetary gear mechanism can be used.

In the wind electric generating facility, the propeller 20 receives wind and rotates (see the outlined arrow in FIG. 1). The rotation of the propeller 20 is accompanied by rotation of the rotary shaft 3 of the heat generating apparatus 1. Thereby, heat is generated in the heat generator 4, and the generated heat is stored in the heat storage device. Thus, the kinetic energy of the rotary shaft 3 of the heat generating apparatus 1 generated by rotation of the propeller 20 is partly converted to thermal energy, and the thermal energy is collected and stored. The energy conversion loss in the moment is small. This is because, between the propeller 20 and the heat generating apparatus 1, there is no such thing as the hydraulic pump or hydraulic motor provided in the wind electric generating facility disclosed in Patent Literature 1. The heat stored in the heat storage device is utilized for electric generation by use of a thermal element, a Stirling engine, etc., for example.

The rotation of the rotary shaft 3 of the heat generating apparatus 1 causes generation of heat in the heat generator 4 and generation of braking force in the rotary shaft 3 to decrease the rotational speed. Thereby, the rotational speed of the propeller 20 is adjusted via the accelerator 24 and the clutch 23. The clutch 23 has the following functions. When heat generation in the heat generating apparatus 1 is needed, the clutch 23 connects the rotary shaft of the propeller 20 to the rotary shaft 3 of the heat generating apparatus 1. Thereby, the rotating force of the propeller 20 is transmitted to the heat generating apparatus 1. When heat generation is no longer necessary because heat is stored in the heat storage device to capacity or when the heat generating apparatus 1 needs to be stopped for maintenance, the clutch 23 disconnects the rotary shaft of the propeller 20 from the rotary shaft 3 of the heat generating apparatus 1. Thereby, the rotating force of the propeller 20 is not transmitted to the heat generating apparatus 1. In order to prevent the propeller 20 from rotating freely by wind on the occasion, it is preferred that a brake system of a frictional type, an electromagnetic type or the like to stop the rotation of the propeller 20 is provided between the propeller 20 and the clutch 23.

As described above, the eddy currents generated in the heat generating drum 4A cause heat generation in the heat generating drum 4A. Therefore, the magnets 5 may rise in temperature by heat from the heat generating drum 4A (for example, radiant heat), thereby decreasing the magnetic force of the magnets 5. Therefore, it is preferred to take a measure to inhibit the temperature rise of the magnets 5.

On this point, in the heat generating apparatus 1 according to the first embodiment, the partition wall 15 of the closed container blocks the heat from the heat generating drum 4A. Therefore, it is possible to prevent the magnets 5 from rising in temperature.

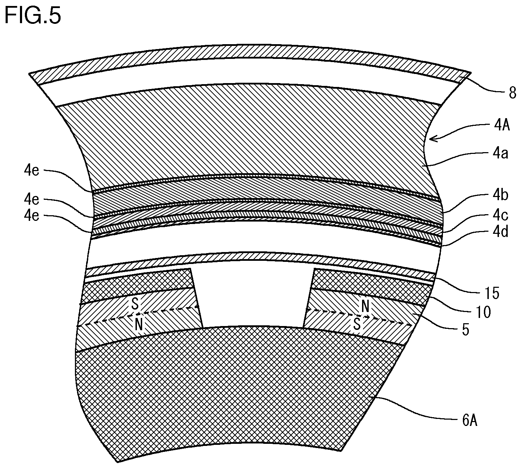

FIG. 5 is a cross-sectional view of a preferred example of the heat generator of the heat generating apparatus according to the first embodiment. FIG. 5 is an enlarged view of the inner peripheral surface of the heat generator 4 (heat generating drum 4A) facing the magnets 5 and its adjacent area. As seen in FIG. 5, the heat generating drum 4A includes a first layer 4b, a second layer 4c and an oxidation resistant coating 4d stacked in this order on the inner peripheral surface of a base 4a. The base 4a is made of a ferromagnetic metal material (for example, carbon steel, cast iron or the like). The first layer 4b is made of a conductive metal material (for example, a copper alloy, an aluminum alloy or the like). The second layer 4c is made of a non-magnetic or feebly magnetic metal material, and the material preferably has higher conductivity than the conductivity of the first layer 4b (for example, an aluminum alloy, a copper alloy or the like). The oxidation resistant coating 4d is, for example, a Ni (nickel) plated layer.

Buffer layers 4e are provided between the base 4a and the first layer 4b, between the first layer 4b and the second layer 4c and between the second layer 4c and the oxidation resistant coating 4d. Each of the buffer layers 4e has a linear expansion coefficient that is greater than the linear expansion coefficient of one of its adjacent materials and smaller than the linear expansion coefficient of the other of its adjacent materials. This is for prevention of delamination. The buffer layers 4e are, for example, NiP (nickel-phosphorus) plated layers.

This layered structure increases the eddy currents generated in the heat generating drum 4A by the effects of magnetic fields of the magnets 5, thereby resulting in achievement of great braking force and sufficient heat generation. However, the second layer 4c may be omitted, and further, the buffer layers 4e may be omitted.

### [Second Embodiment]

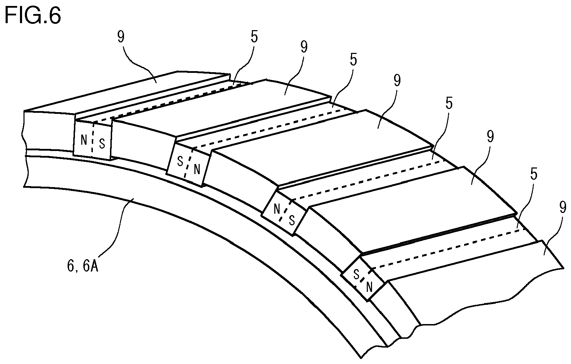

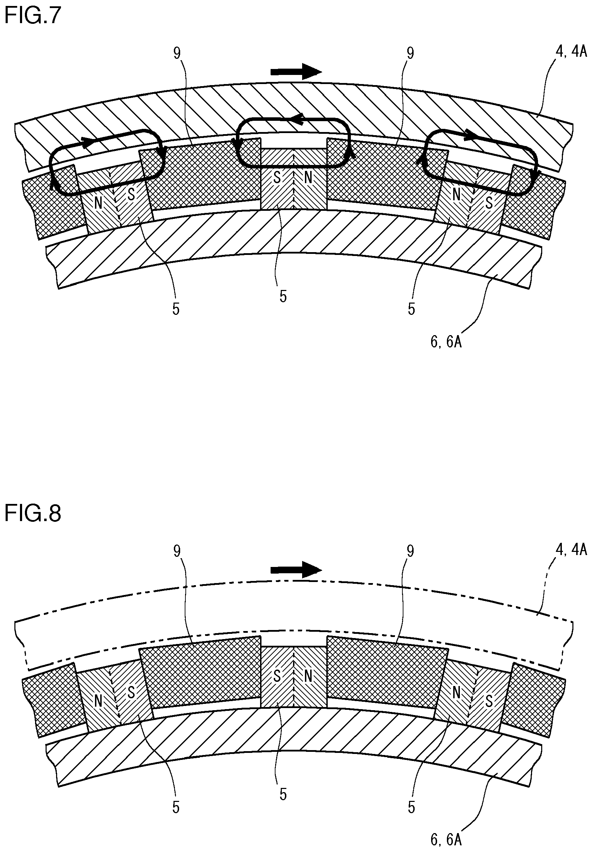

FIG. 6 is a perspective view showing the arrangement of magnets in a heat generating apparatus according to a second embodiment. FIG. 7 is a cross-sectional view showing a state where magnetic circuits are generated between the magnets and a heat generator by operation of a switching mechanism in the heat generating apparatus. FIG. 8 is a cross-sectional view showing a state where no magnetic circuits are generated between the magnets and the heat generator by operation of the switching mechanism in the heat generating apparatus. The heat generating apparatus according to the second embodiment is based on the heat generating apparatus according to the first embodiment. The same applies to the third to ninth embodiments described below. The heat generating apparatus according to the second embodiment differs from the heat generating apparatus according to the first embodiment mainly in the magnetic pole arrangement.

As shown in FIGS. 6 to 8, the magnets 5 are circumferentially arrayed on the outer peripheral surface of the magnet holding ring 6A throughout the whole circumference. Each of the magnets 5 is laid such that the magnetic poles (the north pole and the south pole) thereof are arranged in the circumferential direction along the circumference of the rotary shaft 3, and the magnetic pole arrangements of circumferentially adjacent ones of the magnets 5 are opposite to each other. In the second embodiment, the magnet holding ring 6A that directly holds the magnets 5 is made of a non-magnetic material (for example, a non-magnetic metal material such as an aluminum alloy, austenite stainless steel, a copper alloy or the like). Pole pieces 9 are provided between the circumferentially arrayed magnets 5. In short, the heat generating apparatus according to the second embodiment employs the circumferential magnetic pole arrangement.

The outer surfaces of the pole pieces 9 project from the outer surfaces of the magnets 5 toward the inner peripheral surface of the heat generating drum 4A. Meanwhile, the inner surfaces of the pole pieces 9 are located farther on the outer side than the inner surfaces of the magnets 5. A gap is kept between each of the pole pieces 9 and the magnet holding ring 6A. In FIGS. 7 and 8, the partition wall 15 (see FIG. 1) interposed between the array of magnets 5 and the heat generating drum 4A is omitted.

As in the first embodiment, the heat generating apparatus according to the second embodiment includes an axial motion switching mechanism as the switching mechanism that switches between a state to generate magnetic circuits between the magnets 5 and the heat generator 4 and a state to generate no magnetic circuits between the magnets 5 and the heat generator 4.

In the second embodiment, when the magnets 5 are taken out of the heat generating drum 4A by operation of the axial motion switching mechanism, no magnetic circuits are generated between the magnets 5 and the heat generating drum 4A as shown in FIG. 8. On the other hand, when the magnets 5 are placed inside the heat generating drum 4A by operation of the axial motion switching mechanism, magnetic circuits are generated between the magnets 5 and the heat generating drum 4A as shown in FIG. 7. Specifically, the magnetic fluxes from the magnets 5 (magnetic fields of the magnets 5) are as follows (see the solid arrows in FIG. 7).

As shown in FIG. 7, circumferentially adjacent magnets 5 are arranged such that the magnetic poles of the respective magnets 5 with the same polarity face each other across a pole piece 9. Also, the magnet holding ring 6A holding the magnets 5 is non-magnetic. Therefore, the magnetic fluxes outgoing from the north poles of these magnets 5 repel each other and reach the heat generating drum 4A via the pole piece 9. The magnetic fluxes that have reached the heat generating drum 4A reach the south poles of the respective magnets 5 via pole pieces 9 respectively adjacent thereto. Thus, each of the magnets 5 forms a magnetic circuit across the magnet 5, the adjacent pole pieces 9 and the heat generating drum 4A. Such magnetic circuits are formed throughout the whole circumference such that adjacent magnetic fluxes are in opposite directions. Then, the magnetic fields of the magnets 5 spread out, and the magnetic flux density reaching the heat generating ring 4A (heat generator 4) becomes high.

Accordingly, the heat generating apparatus according to the second embodiment has the same effects as the heat generating apparatus according to the first embodiment.

### [Third Embodiment]

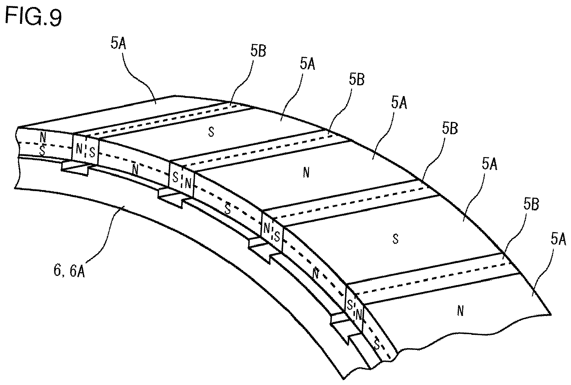

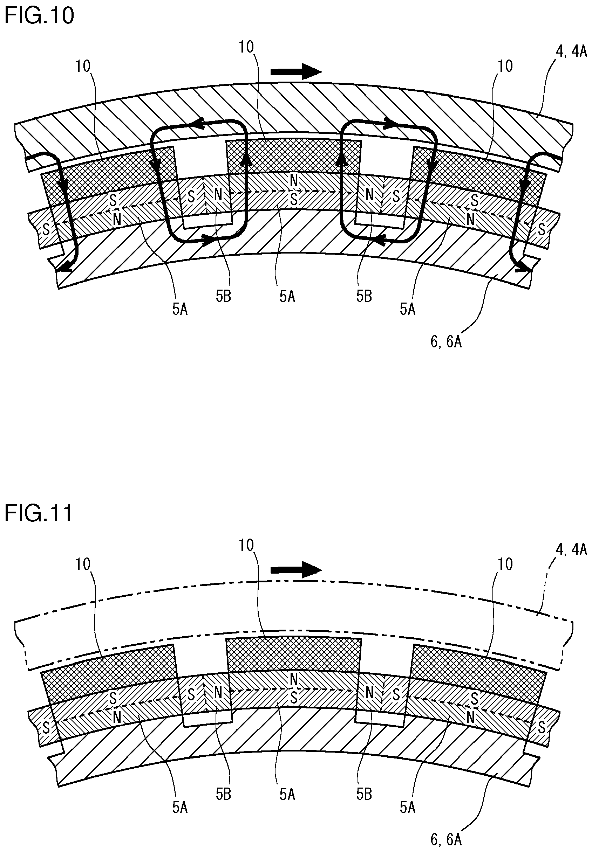

FIG. 9 is a perspective view showing the arrangement of magnets in a heat generating apparatus according to a third embodiment. FIG. 10 is a cross-sectional view showing a state where magnetic circuits are generated between the magnets and a heat generator by operation of a switching mechanism in the heat generating apparatus. FIG. 11 is a cross-sectional view showing a state where no magnetic circuits are generated between the magnets and the heat generator by operation of the switching mechanism in the heat generating apparatus. The heat generating apparatus according to the third embodiment differs from the heat generating apparatus according to the first embodiment mainly in the magnetic pole arrangement.

As shown in FIGS. 9 to 11, the magnets 5 include primary magnets 5A and secondary magnets 5B, and these magnets 5A and 5B are circumferentially arrayed on the outer peripheral surface of the magnet holding ring 6A throughout the whole circumference. The secondary magnets 5B are provided between the circumferentially arrayed primary magnets 5A. Each of the primary magnets 5A is laid such that the magnetic poles (the north pole and the south pole) thereof are arranged in the radial direction from the axis of the rotary shaft 3, and the magnetic pole arrangements of circumferentially adjacent ones of the primary magnets 5A are opposite to each other. Each of the secondary magnets 5B is laid such that the magnetic poles (the north pole and the south pole) thereof are arranged in the circumferential direction along the circumference of the rotary shaft 3, and the magnetic pole arrangements of circumferentially adjacent ones of the magnets 5B are opposite to each other. In the third embodiment, the magnet holding ring 6A that directly holds the magnets 5A and 5B is ferromagnetic as in the first embodiment. In short, the heat generating apparatus according to the third embodiment employs the two-directional magnetic pole arrangement.

As shown in FIGS. 10 and 11, pole pieces 10 are fixed on the outer surfaces of the respective primary magnets 5A. A gap is kept between each of the secondary magnets 5B and the magnet holding ring 6A. The north pole of each of the secondary magnets 5B is in contact with a primary magnet 5A with its north pole positioned on the outer side. In FIGS. 10 and 11, the partition wall 15 interposed between the array of magnets 5A and 5B and the heat generating drum 4A (see FIG. 1) is omitted.

As in the first embodiment, the heat generating apparatus according to the third embodiment includes an axial motion switching mechanism as the switching mechanism that switches between a state to generate magnetic circuits between the magnets 5A, 5B and the heat generator 4 and a state to generate no magnetic circuits between the magnets 5A, 5B and the heat generator 4.

In the third embodiment, when the magnets 5A and 5B are taken out of the heat generating drum 4A by operation of the axial motion switching mechanism, no magnetic circuits are generated between the magnets 5A, 5B and the heat generating drum 4A as shown in FIG. 11. On the other hand, when the magnets 5A and 5B are placed inside the heat generating drum 4A by operation of the axial motion switching mechanism, magnetic circuits are generated between the magnets 5A, 5B and the heat generating drum 4A as shown in FIG. 10. Specifically, the magnetic fluxes from the magnets 5 (magnetic fields of the magnets 5) are as follows (see the solid arrows in FIG. 10).

As shown in FIG. 10, the magnetic pole arrangements of circumferentially adjacent primary magnets 5A with a secondary magnet 5B in between are opposite to each other. Similarly, the magnetic pole arrangements of circumferentially adjacent secondary magnets 5B with a primary magnet 5A in between are opposite to each other. The magnet holding ring 6A that holds the magnets 5A and 5B is ferromagnetic.

With regard to a first primary magnet 5A and a second primary magnet 5A that are adjacent to each other, the magnetic flux outgoing from the north pole of the first primary magnet 5A through the pole piece 10 fixed thereon reaches the heat generating drum 4A facing the first primary magnet 5A. On the magnetic flux, the magnetic flux outgoing from the north pole of the secondary magnet 5B that is in contact with the first primary magnet 5A is superimposed. The magnetic flux that has reached the heat generating drum 4A reaches the south pole of the second primary magnet 5A through the pole piece 10 fixed thereon. The magnetic flux outgoing from the north pole of the second primary magnet 5A reaches the south pole of the first primary magnet 5A via the magnet holding ring 6A. Thus, the circumferentially adjacent primary magnets 5A form a magnetic circuit across the adjacent primary magnets 5A, the magnet holding ring 6A holding the magnets 5A and 5B, and the heat generating drum 4A. Such magnetic circuits are formed throughout the whole circumference such that adjacent magnetic fluxes are in opposite directions. Then, the magnetic fields of the magnets 5A and 5B spread out, and the magnetic flux density reaching the heat generating ring 4A (heat generator 4) becomes high.

Therefore, the heat generating apparatus according to the third embodiment has the same effects as the heat generating apparatus according to the first embodiment.

### [Fourth Embodiment]

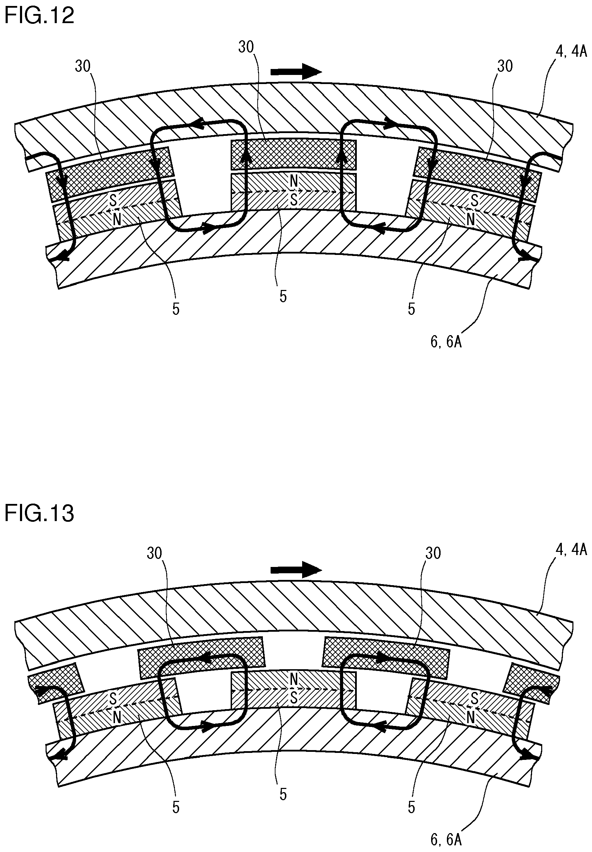

FIG. 12 is a cross-sectional view showing a state where magnetic circuits are generated between magnets and a heat generator by operation of a switching mechanism in a heat generating apparatus according to a fourth embodiment. FIG. 13 is a cross-sectional view showing a state where no magnetic circuits are generated between the magnets and the heat generator by operation of the switching mechanism in the heat generating apparatus according to the fourth embodiment. The heat generating apparatus according to the fourth embodiment is a modification of the first embodiment. As compared with the first embodiment, the heat generating apparatus according to the fourth embodiment is the same in that the radial magnetic pole arrangement is employed but is different in the switching mechanism.

The heat generating apparatus according to the fourth embodiment includes a single-row rotation switching mechanism as the switching mechanism that switches between a state to generate magnetic circuits between the magnets and the heat generator and a state to generate no magnetic circuits between the magnets and the heat generator. Specifically, as shown in FIGS. 12 and 13, the magnets 5 and the magnet holding ring 6A are located inside the heat generating drum 4A at all times, and are not movable along the axis of the rotary shaft 3. In the gap between the heat generating drum 4A (heat generator 4) and the magnets 5, a plurality of ferromagnetic plate-shaped switches 30 are arrayed in the circumferential direction along the circumference of the rotary shaft 3 throughout the whole circumference. The placement angles of the switches 30 are the same as the placement angles of the magnets 5. The switches 30 are about the same size as each of the magnets 5.

Both sides of the respective switches 30 are held by a switch holding ring (not shown). The switch holding ring is in the shape of a cylinder that is coaxial with the rotary shaft 3, and is fixed to the body 2. The magnetic holding ring 6A holding the magnets 5 is rotatable around the rotary shaft 3. For example, a drive source (not shown in the drawings) such as an air cylinder, an electric actuator or the like is connected to the magnetic holding ring 6A. By operation of the drive source, the magnet holding ring 6A and the magnets 5 are rotated together. Thereby, the switches 30 can be put into a state where each of the switches 30 entirely overlaps the magnet 5 immediately below (see FIG. 12) and a state where each of the switches 30 lies across two adjacent magnets 5 (see FIG. 13). Further, by controlling the degree of action of the drive source, the switches 30 can be put into a state where each of the switches 30 partly overlaps the magnet 5 below without lying across two adjacent magnets 5.

In the heat generating apparatus according to the fourth embodiment, the partition wall 15 (see FIG. 1) that is a part of the closed container is located between the array of switches 30 and the heat generating drum 4A. In FIGS. 12 and 13, the partition wall 15 is omitted.

In the fourth embodiment, when the single-row rotation switching mechanism puts the switches 30 into a state where each of the switches 30 lies across two adjacent magnets 5, the magnetic fluxes from the magnets 5 (magnetic fields of the magnets 5) are as follows (see the solid arrows in FIG. 13). With regard to a first magnet 5 and a second magnet 5 that are adjacent to each other, as shown in FIG. 13, the magnetic flux outgoing from the north pole of the first magnet 5 reaches the south pole of the second magnet 5 through the switch 30 lying across these magnets 5. The magnetic flux outgoing from the north pole of the second magnet 5 reaches the south pole of the first magnet 5 through the magnetic holding ring 6A. Thus, the magnetic fluxes from the magnets 5 do not reach the heat generating drum 4A, and no magnetic circuits are generated between the magnets 5 and the heat generating drum 4A.

On the other hand, when the single-row rotation switching mechanism puts the switches 30 into a state where each of the switches 30 entirely overlaps the magnet 5 immediately below, the magnetic fluxes from the magnets 5 (magnetic field of the magnet 5) are as follows (see the solid arrows in FIG. 12). With regard to the first magnet 5 and the second magnet 5 that are adjacent to each other, as shown in FIG. 12, the magnetic flux outgoing from the north pole of the first magnet 5 passes through the switch 30 directly above and reaches the heat generating drum 4A. The magnetic flux that has reached the heat generating drum 4A passes through an adjacent switch 30 and reaches the south pole of the second magnet 5. The magnetic flux outgoing from the north pole of the second magnet 5 reaches the south pole of the first magnet 5 through the magnetic holding ring 6A. Thus, the circumferentially adjacent magnets 5 form a magnetic circuit across the adjacent magnets 5, the magnet holding ring 6A holding the magnets 5, the adjacent switches 30, and the heat generating drum 4A. Such magnetic circuits are formed throughout the whole circumference such that adjacent magnetic fluxes are in opposite directions.

Therefore, the heat generating apparatus according to the fourth embodiment has the same effects as the heat generating apparatus according to the first embodiment. Moreover, the single-row rotation switching mechanism employed in the fourth embodiment allows for a reduction in the entire length of the apparatus, and accordingly is effective for downsizing of the apparatus.

When the degree of action of the single-row rotation switching mechanism is controlled to put the switches 30 into a state where each of the switches 30 partly overlaps the magnet 5 below without lying across two adjacent magnets 5, the magnetic flux density of the magnets 5 reaching the heat generating drum 4A is different from that when each of the switches 30 entirely overlaps the magnet 5 below. Thus, controlling the degree of action of the single-row rotation switching mechanism allows for adjustment of the amount of heat generation in the heat generating drum 4A, thereby resulting in adjustment of the amount of collected heat.

### [Fifth Embodiment]

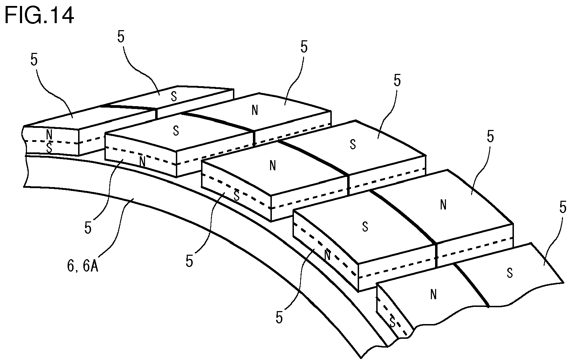

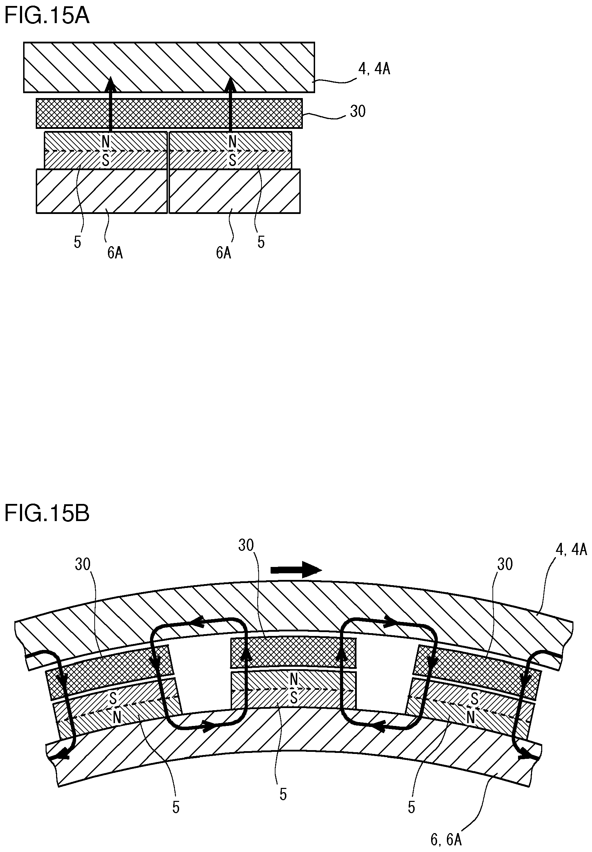

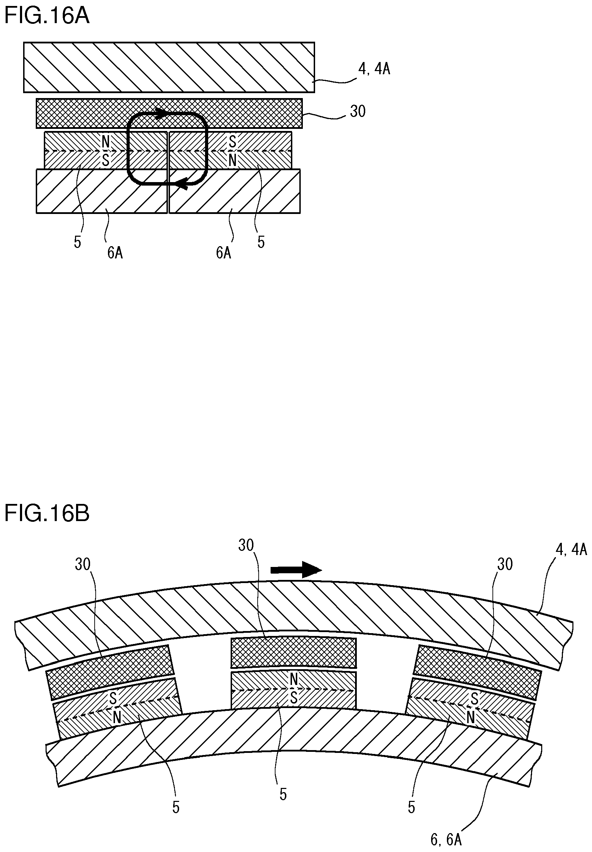

FIG. 14 is a perspective view showing the arrangement of magnets in a heat generating apparatus according to a fifth embodiment. FIGS. 15A and 15B are cross-sectional views showing a state where magnetic circuits are generated between the magnets and a heat generator by operation of a switching mechanism in the heat generating apparatus. FIGS. 16A and 16B are cross-sectional views showing a state where no magnetic circuits are generated between the magnets and the heat generator by operation of the switching mechanism in the heat generating apparatus. FIGS. 15A and 16A are longitudinal sectional views of the heat generating apparatus, and FIGS. 15B and 16B are cross-sectional views showing the status of generation of magnetic circuits. The heat generating apparatus according to the fifth embodiment is a modification of the first and the fourth embodiments. As compared with the first and the fourth embodiments, the heat generating apparatus according to the fifth embodiment is the same in that the radial magnetic pole arrangement is employed but is different in the switching mechanism.

The heat generating apparatus according to the fifth embodiment includes a two-row rotation switching mechanism as the switching mechanism that switches between a state to generate magnetic circuits between the magnets and the heat generator and a state to generate no magnetic circuits between the magnets and the heat generator. Specifically, as shown in FIGS. 14 to 16B, the magnets 5 and the magnet holding ring 6A are located inside the heat generating drum 4A at all times, and are not movable along the axis of the rotary shaft 3. The array of magnets 5 is divided into two rows (a first row and a second row), each of the rows extending in the circumferential direction along the circumference of the rotary shaft 3, and the magnet holding ring 6A is divided into two sections (a first section and a second section) for the first row and the second row, respectively. The first row of magnets 5 and the first section of the magnet holding ring 6A, and the second row of magnets 5 and the second section of the magnet holding ring 6A are independent of each other and are located with a narrow gap in between. The length (dimension in the axial direction along the axis of the rotary shaft 3) of the magnets 5 in the first row is nearly equal to the length of the magnets 5 in the second row (see FIGS. 14, 15A and 16A).

In the gap between the heat generating drum 4A (heat generator 4) and the magnets 5, a plurality of ferromagnetic plate-shaped switches 30 are arrayed in the circumferential direction along the circumference of the rotary shaft 3 throughout the whole circumference. Unlike the array of magnets 5 and the magnetic holding ring 6A, the array of switches 30 is not divided. The placement angles of the switches 30 are the same as the placement angles of the magnets 5. Each of the switches 30 has a size as follows. The dimension of the switch 30 in the circumferential direction along the circumference of the rotary shaft 3 is nearly equal to that of each of the magnets 5 (see FIGS. 15B and 16B). The dimension of the switch 30 in the axial direction along the axis of the rotary shaft 3 is nearly equal to the total of that of a magnet 5 in the first row and that of a magnet 5 in the second row (see FIGS. 15A and 16A).

Both sides of the respective switches 30 are held by a switch holding ring (not shown in the drawings). The switch holding ring is in the shape of a cylinder that is coaxial with the rotary shaft 3, and is fixed to the body 2.

Out of the first and the second sections of the magnetic holding ring 6A, the first section of the magnetic holding ring 6A for the first row is fixed to the body 2. The second section of the magnetic holding ring 6A for the second row is rotatable around the rotary shaft 3. For example, a drive source such as an air cylinder, an electric actuator or the like is connected to the second section of the magnetic holding ring 6A though it is not shown in the drawings. By operation of the drive source, the second section of the magnet holding ring 6A and the second row of magnets 5 are rotated together. Thereby, the magnets 5 can be put into a state where magnets that have the same magnetic pole arrangement are positioned completely in alignment with each other in the axial direction along the axis of the rotary shaft 3 as two adjacent magnets 5 that are located in the first row and in the second row respectively (see FIG. 15A) and a state where magnets that have opposite magnetic pole arrangements are positioned completely in alignment with each other in the axial direction as two adjacent magnets 5 that are located in the first row and in the second row respectively (see FIG. 16A). Further, by controlling the degree of action of the drive source, the magnets 5 can be put into a state where magnets that have the same magnetic pole arrangement are positioned partly in alignment with each other in the axial direction as two adjacent magnets 5 that are located in the first row and in the second row respectively.

In the heat generating apparatus according to the fifth embodiment, the partition wall 15 (see FIG. 1) that is a part of the closed container is interposed between the array of switches 30 and the heat generating drum 4A. In FIGS. 15A to 16B, the partition wall 15 is omitted.

In the fifth embodiment, when the two-row rotation switching mechanism puts the magnets 5 into a state where magnets that have opposite magnetic pole arrangements are positioned completely in alignment with each other in the axial direction as two adjacent magnets 5 that are located in the first row and in the second row respectively, the magnetic fluxes from the magnets 5 (magnetic fields of the magnets 5) are as follows (see the solid arrows in FIG. 16A). With regard to a first magnet 5 in the first row and a second magnet 5 in the second row that are adjacent to each other, as shown in FIG. 16A, the magnetic flux outgoing from the north pole of the first magnet 5 reaches the south pole of the second magnet 5 through the switch 30 located thereabove. The magnetic flux outgoing from the north pole of the second magnet 5 reaches the south pole of the first magnet 5 through the magnet holding ring 6A. Thus, the magnetic fluxes from the magnets 5 do not reach the heat generating drum 4A, and no magnetic circuits are generated between the magnets 5 and the heat generating drum 4A.

On the other hand, when the two-row rotation switching mechanism puts the magnets 5 into a state where magnets that have the same magnetic pole arrangement are positioned completely in alignment with each other in the axial direction as two adjacent magnets 5 that are located in the first row and in the second row respectively, the magnetic fluxes from the magnets 5 (magnetic fields of the magnets 5) are as follows (see the solid arrows in FIGS. 15A and 15B). With regard to a first magnet 5 and a second magnet 5 that are circumferentially adjacent to each other, as shown in FIGS. 15A and 15B, the magnetic flux outgoing from the north pole of the first magnet 5 passes through the switch 30 thereabove and reaches the heat generating drum 4A. The magnetic flux that has reached the heat generating drum 4A reaches the south pole of the second magnet 5 through an adjacent switch 30. The magnetic flux outgoing from the north pole of the second magnet 5 reaches the south pole of the first magnet 5 through the magnet holding ring 6A. Thus, magnetic circuits are generated in the same way as in the fourth embodiment.

Accordingly, the heat generating apparatus according to the fifth embodiment has the same effects as the heat generating apparatus according to the first embodiment. Moreover, the two-row rotation switching mechanism employed in the fifth embodiment allows for a reduction in the entire length of the apparatus, and accordingly is effective for downsizing of the apparatus.

When the degree of action of the two-row rotation switching mechanism is controlled to put the magnets 5 into a state where magnets that have the same magnetic pole arrangement are positioned partly in alignment with each other in the axial direction as two adjacent magnets 5 that are located in the first row and in the second row respectively, the magnetic flux density of the magnets 5 reaching the heat generating drum 4A is different from that when these magnets 5 are positioned completely in alignment with each other. Thus, controlling the degree of action of the two-row rotation switching mechanism allows for adjustment of the amount of heat generation in the heat generating drum 4A, thereby resulting in adjustment of the amount of collected heat.

### [Sixth Embodiment]

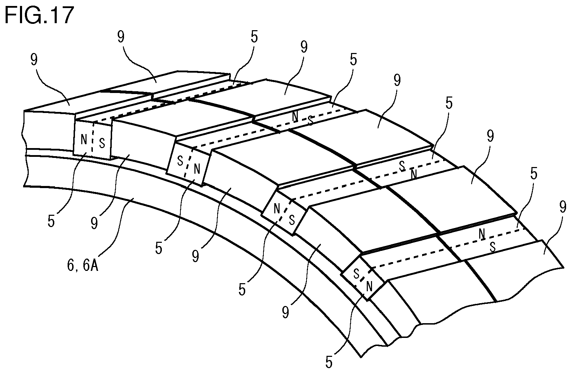

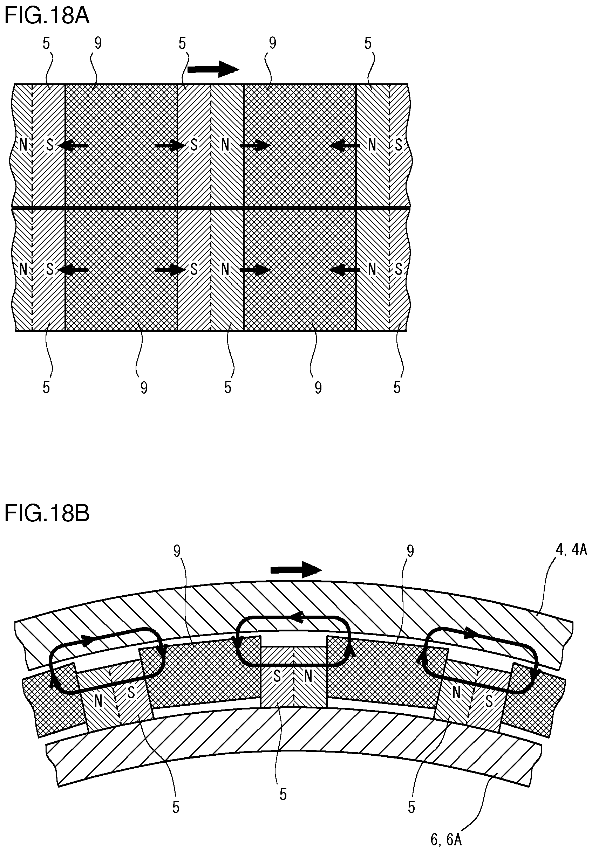

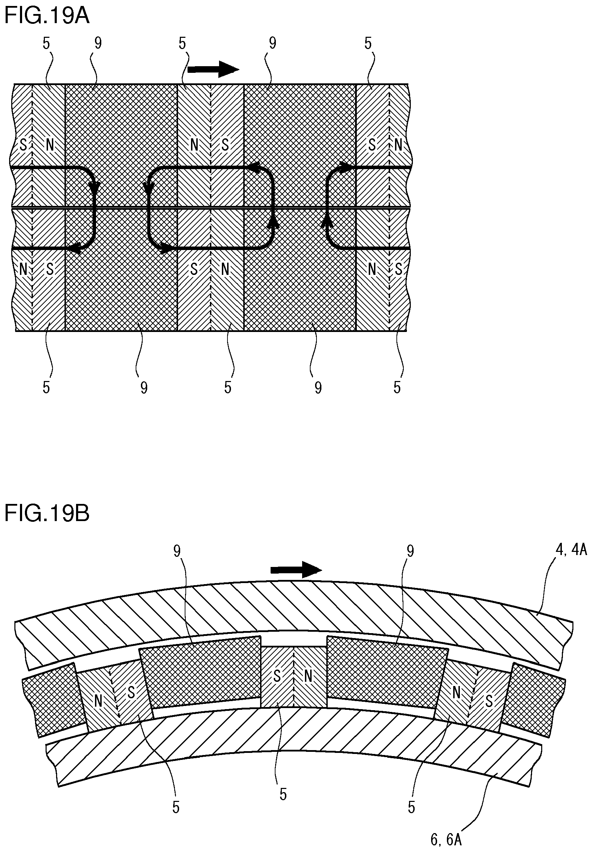

FIG. 17 is a perspective view showing the arrangement of magnets in a heat generating apparatus according to a sixth embodiment. FIGS. 18A and 18B are cross-sectional views showing a state where magnetic circuits are generated between the magnets and a heat generator by operation of a switching mechanism in the heat generating apparatus. FIGS. 19A and 19B are cross-sectional views showing a state where no magnetic circuits are generated between the magnets and the heat generator by operation of the switching mechanism in the heat generating apparatus. FIGS. 18A and 19A are sectional views along the circumference, and FIGS. 18B and 19B are cross-sectional views showing the status of generation of magnetic circuits. The heat generating apparatus according to the sixth embodiment is a modification of the second embodiment. As compared with the second embodiment, the heat generating apparatus according to the sixth embodiment is the same in that the circumferential magnetic pole arrangement is employed but is different in the switching mechanism.

As in the fifth embodiment, the heat generating apparatus according to the sixth embodiment includes a two-row rotation switching mechanism as the switching mechanism that switches between a state to generate magnetic circuits between the magnets and the heat generator and a state to generate no magnetic circuits between the magnets and the heat generator. Specifically, as shown in FIGS. 17 to 19B, the magnets 5, the pole pieces 9 and the magnet holding ring 6A are located inside the heat generating drum 4A at all times, and are not movable along the axis of the rotary shaft 3. The array of magnets 5 and pole pieces 9 is divided into two rows (a first row and a second row), each of the rows extending in the circumferential direction along the circumference of the rotary shaft 3, and the magnet holding ring 6A is divided into two sections (a first section and a second section) for the first row and the second row, respectively. The first row of magnets 5 and pole pieces 9 and the first section of the magnet holding ring 6A, and the second row of magnets 5 and pole pieces 9 and the second section of the magnet holding ring 6A are independent of each other and are located with a narrow gap in between. The length (dimension in the axial direction along the axis of the rotary shaft 3) of the magnets 5 in the first row is nearly equal to the length of the magnets 5 in the second row, and the length of the pole pieces 9 in the first row is nearly equal to the length of the pole pieces 9 in the second row (see FIGS. 17, 18A and 19A).

Out of the first and the second sections of the magnetic holding ring 6A, the first section of the magnetic holding ring 6A for the first row is fixed to the body 2. The second section of the magnetic holding ring 6A for the second row is rotatable around the rotary shaft 3. For example, a drive source such as an air cylinder, an electric actuator or the like is connected to the magnetic holding ring 6A for the second row though it is not shown in the drawings. By operation of the drive source, the second section of the magnet holding ring 6A, and the second row of magnets 5 and pole pieces 9 are rotated together. Thereby, the magnets 5 can be put into a state where magnets that have the same magnetic pole arrangement are positioned completely in alignment with each other in the axial direction along the axis of the rotary shaft 3 as two adjacent magnets 5 that are located in the first row and in the second row respectively (see FIG. 18A) and a state where magnets that have opposite magnetic pole arrangements are positioned completely in alignment with each other in the axial direction as two adjacent magnets 5 that are located in the first row and in the second row respectively (see FIG. 19A). Further, by controlling the degree of action of the drive source, the magnets 5 can be put into a state where magnets that have the same magnetic pole arrangement are positioned partly in alignment with each other in the axial direction as two adjacent magnets 5 that are located in the first row and in the second row respectively.

In the heat generating apparatus according to the sixth embodiment, the partition wall 15 (see FIG. 1) that is a part of the closed container is interposed between the array of magnets 5 and pole pieces 9 and the heat generating drum 4A. In FIGS. 18A to 19B, the partition wall 15 is omitted.

In the sixth embodiment, when the two-row rotation switching mechanism puts the magnets 5 into a state where magnets that have opposite magnetic pole arrangements are positioned completely in alignment with each other in the axial direction as two adjacent magnets 5 that are located in the first row and in the second row respectively, the magnetic fluxes from the magnets 5 (magnetic fields of the magnets 5) are as follows (see the solid arrows in FIG. 19A). As shown in FIG. 19A, the magnetic fluxes outgoing from the north poles of circumferentially adjacent magnets 5 in the same row repel each other in the pole piece 9 therebetween. The repelled magnetic fluxes flow along the pole piece 9 in the next row and reach the south poles of magnets 5 in the next row. Thus, the magnetic fluxes from the magnets 5 do not reach the heat generating drum 4A, and no magnetic circuits are generated between the magnets 5 and the heat generating drum 4A.

On the other hand, when the two-row rotation switching mechanism puts the magnets 5 into a state where magnets that have the same magnetic pole arrangement are positioned completely in alignment with each other in the axial direction as two adjacent magnets 5 that are located in the first row and in the second row respectively, the magnetic fluxes from the magnets 5 (magnetic fields of the magnets 5) are as follows (see the solid arrows in FIGS. 18A and 18B). As shown in FIGS. 18A and 18B, the magnetic fluxes outgoing from the north poles of circumferentially adjacent magnets 5 repel each other and reach the heat generating drum 4A through the pole piece 9 therebetween. The magnetic fluxes that have reached the heat generating drum 4A reaches the south poles of the magnets 5 through the pole pieces 9 circumferentially adjacent to the respective magnets 5. Thus, magnetic circuits are generated in the same way as in the second embodiment.

Accordingly, the heat generating apparatus according to the sixth embodiment has the same effects as the heat generating apparatuses according to the second and the fifth embodiments.

### [Seventh Embodiment]

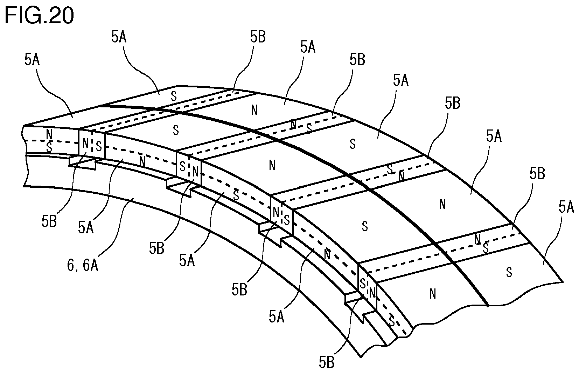

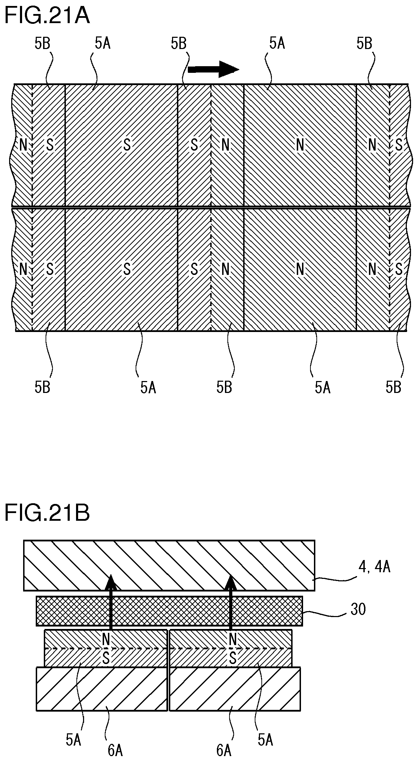

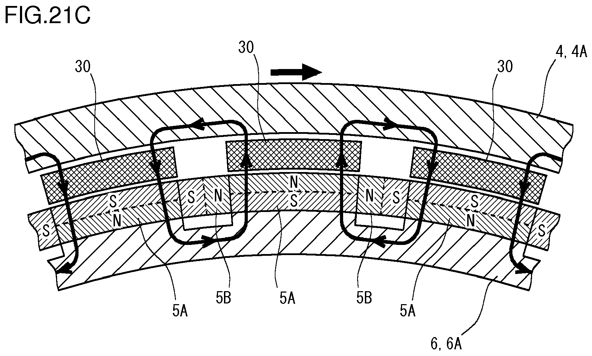

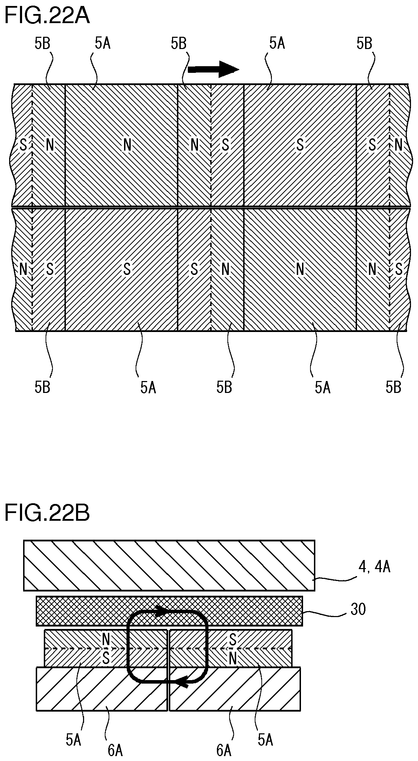

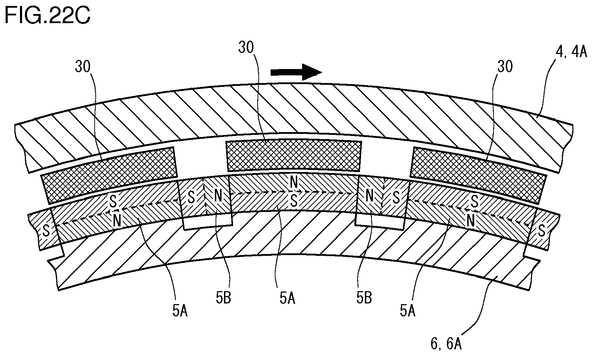

FIG. 20 is a perspective view showing the arrangement of magnets in a heat generating apparatus according to a seventh embodiment. FIGS. 21A to 21C are cross-sectional views showing a state where magnetic circuits are generated between the magnets and a heat generator by operation of a switching mechanism in the heat generating apparatus. FIGS. 22A and 22C are cross-sectional views showing a state where no magnetic circuits are generated between the magnets and the heat generator by operation of the switching mechanism in the heat generating apparatus. FIGS. 21A and 22A are sectional views along the circumference, FIGS. 21B and 22B are longitudinal sectional views of the heat generating apparatus, and FIGS. 21C and 22C are cross-sectional views showing the status of generation of magnetic circuits. The heat generating apparatus according to the seventh embodiment is a modification of the third embodiment. As compared with the third embodiment, the heat generating apparatus according to the seventh embodiment is the same in that the two-directional magnetic pole arrangement is employed but is different in the switching mechanism.

As in the fifth embodiment, the heat generating apparatus according to the seventh embodiment includes a two-row rotation switching mechanism as the switching mechanism that switches between a state to generate magnetic circuits between the magnets and the heat generator and a state to generate no magnetic circuits between the magnets and the heat generator. Specifically, as shown in FIGS. 20 to 22C, the magnets 5A and 5B, and the magnet holding ring 6A are located inside the heat generating drum 4A at all times, and are not movable along the axis of the rotary shaft 3. The array of magnets 5A and 5B is divided into two rows (a first row and a second row), each of the rows extending in the circumferential direction along the circumference of the rotary shaft 3, and the magnet holding ring 6A is divided into two sections for the first row and the second row, respectively. The first row of magnets 5A and 5B and the first section of the magnet holding ring 6A, and the second row of magnets 5A and 5B and the second section of the magnet holding ring 6A are independent of each other and are located with a narrow gap in between. The length (dimension in the axial direction along the axis of the rotary shaft 3) of the magnets 5A in the first row is nearly equal to the length of the magnets 5A in the second row, and the length of the magnets 5B in the first row is nearly equal to the length of the magnets 5B in the second row (see FIGS. 20, 21A, 22A and 22B).

In the gap between the heat generating drum 4A (heat generator 4) and the primary magnets 5A, a plurality of ferromagnetic plate-shaped switches 30 are arrayed in the circumferential direction along the circumference of the rotary shaft 3 throughout the whole circumference. Unlike the array of magnets 5A and 5B and the magnet holding ring 6A, the array of switches 30 is not divided. The placement angles of the switches 30 are the same as the placement angles of the primary magnets 5A. Each of the switches 30 has the following dimensions. The dimension in the circumferential direction along the circumference of the rotary shaft 3 is nearly equal to that of each of the primary magnets 5A (see FIGS. 21C and 22C). The dimension in the axial direction along the axis of the rotary shaft 3 is nearly equal to the total of those of a primary magnet 5A in the first row and a primary magnet 5A in the second row (see FIGS. 21B and 22B).

Both ends of the respective switches 30 are held by a switch holding ring (not shown). The switch holding ring is in the shape of a cylinder that is coaxial with the rotary shaft 3, and is fixed to the body 2.

Out of the first and the second sections of the magnetic holding ring 6A, the first section of the magnetic holding ring 6A for the first row is fixed to the body 2. The second section of the magnetic holding ring 6A for the second row is rotatable around the rotary shaft 3. For example, a drive source such as an air cylinder, an electric actuator or the like is connected to the magnetic holding ring 6A for the second row though it is not shown in the drawings. By operation of the drive source, the second section of the magnet holding ring 6A and the second row of magnets 5A and 5B are rotated together. Thereby, the magnets 5A and 5B can be put into a state where magnets that have the same magnetic pole arrangement are positioned completely in alignment with each other in the axial direction along the axis of the rotary shaft 3 as two adjacent primary magnets 5A that are located in the first row and in the second row respectively and where magnets that have the same magnetic pole arrangement are positioned completely in alignment with each other in the axial direction as two adjacent secondary magnets 5B that are located in the first row and in the second row respectively (see FIGS. 21A and 21B) and a state where magnets that have opposite magnetic pole arrangements are positioned completely in alignment with each other in the axial direction as two adjacent primary magnets 5A that are located in the first row and in the second row respectively and where magnets that have opposite magnetic pole arrangements are positioned completely in alignment with each other in the axial direction as two adjacent secondary magnets 5B that are located in the first row and in the second row respectively (see FIGS. 22A and 22B). Further, by controlling the degree of action of the drive source, the magnets 5A and 5B can be put into a state where magnets that have the same magnetic pole arrangement are positioned partly in alignment with each other in the axial direction as two adjacent primary magnets 5A that are located in the first row and in the second row respectively and where magnets that have the same magnetic pole arrangement are positioned partly in alignment with each other in the axial direction as two adjacent secondary magnets 5B that are located in the first row and in the second row respectively.

In the heat generating apparatus according to the seventh embodiment, the partition wall 15 (see FIG. 1) that is a part of the closed container is interposed between the array of magnets 5A and 5B and the heat generating drum 4A. In FIGS. 21A to 21C, the partition wall 15 is omitted.

In the seventh embodiment, when the two-row switching mechanism puts the magnets 5A and 5B into a state where magnets that have opposite magnetic pole arrangements are positioned completely in alignment with each other in the axial direction as two adjacent primary magnets 5A that are located in the first row and in the second row respectively and where magnets that have opposite magnetic pole arrangements are positioned completely in alignment with each other in the axial direction as two adjacent secondary magnets 5B that are located in the first row and in the second row respectively, the magnetic fluxes from the magnets 5A and 5B (magnetic fields of the magnets 5A and 5B) are as follows (see the solid arrows in FIG. 22B). As shown in FIG. 22B, with regard to a first primary magnet 5A in the first row and a second primary magnet 5A in the second row that are adjacent to each other, the magnetic flux outgoing from the north pole of the first primary magnet 5A flows along the switch 30 thereabove and reaches the south pole of the second primary magnet 5A. On the magnetic flux, the magnetic flux outgoing from the north pole of the secondary magnet 5B that is in contact with the first primary magnet 5A is superimposed. The magnetic flux outgoing from the north pole of the second primary magnet 5A reaches the south pole of the first primary magnet 5A through the magnet holding ring 6A. Thus, the magnetic fluxes from the magnets 5A and 5B do not reach the heat generating drum 4A, and no magnetic fields are generated between the magnets 5A and 5B and the heat generating drum 4A.

On the other hand, when the two-row switching mechanism puts the first and the second rows of magnets 5A and 5B into a state where magnets that have the same magnetic pole arrangement are positioned completely in alignment with each other in the axial direction as two adjacent primary magnets 5A that are located in the first row and in the second row respectively and where magnets that have the same magnetic pole arrangement are positioned completely in alignment with each other in the axial direction as two adjacent secondary magnets 5B that are located in the first row and in the second row respectively, the magnetic fluxes from the magnets 5A and 5B (magnetic fields of the magnets 5A and 5B) are as follows (see the solid arrows in FIGS. 21B and 21C). As shown in FIGS. 21A to 21C, with regard to a first primary magnet 5A and a second primary magnet 5A that are circumferentially adjacent to each other, the magnetic flux outgoing from the north pole of the first primary magnet 5A passes through the switch 30 thereabove and reaches the heat generating drum 4A. On the magnetic flux, the magnetic flux outgoing from the north pole of the secondary magnet 5B that is in contact with the first primary magnet 5A is superimposed. The magnetic flux that has reached the heat generating drum 4A reaches the south pole of the second primary magnet 5A through the adjacent switch 30. The magnetic flux outgoing from the north pole of the second primary magnet 5A reaches the south pole of the first primary magnet 5A via the magnet holding ring 6A. Thus, magnetic circuits are generated in the same manner as in the third embodiment.

Therefore, the heat generating apparatus according to the seventh embodiment has the same effects as the heat generating apparatuses according to the third and the fifth embodiments.

### [Eighth Embodiment]

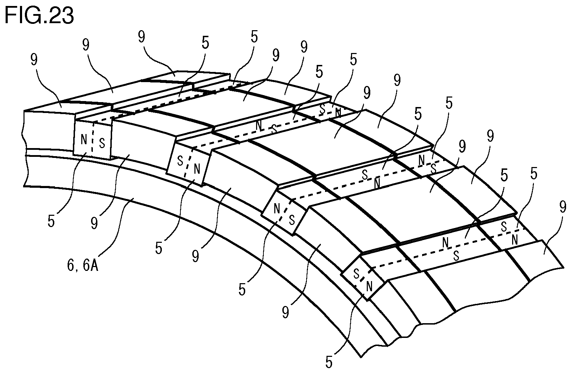

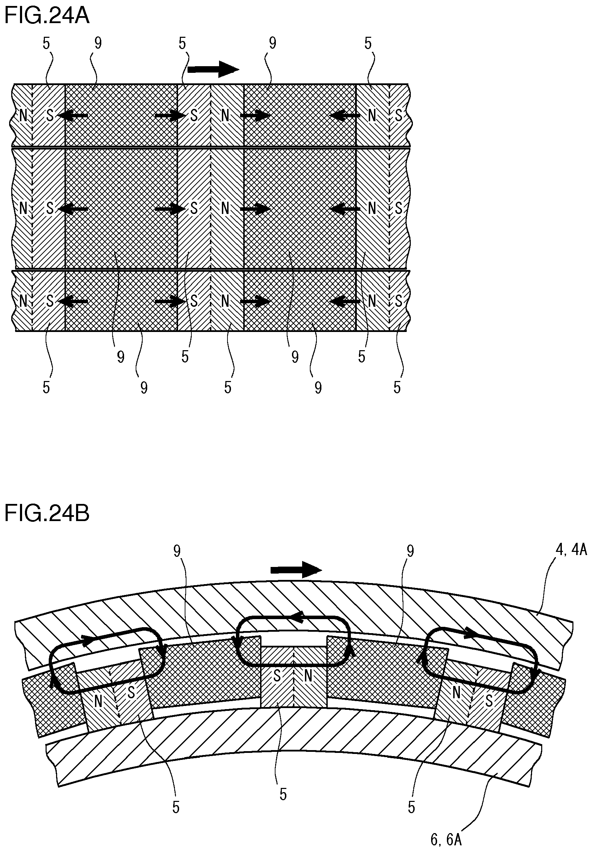

FIG. 23 is a perspective view showing the arrangement of magnets in a heat generating apparatus according to an eighth embodiment. FIGS. 24A and 24B are cross-sectional views showing a state where magnetic circuits are generated between the magnets and a heat generator by operation of a switching mechanism in the heat generating apparatus.

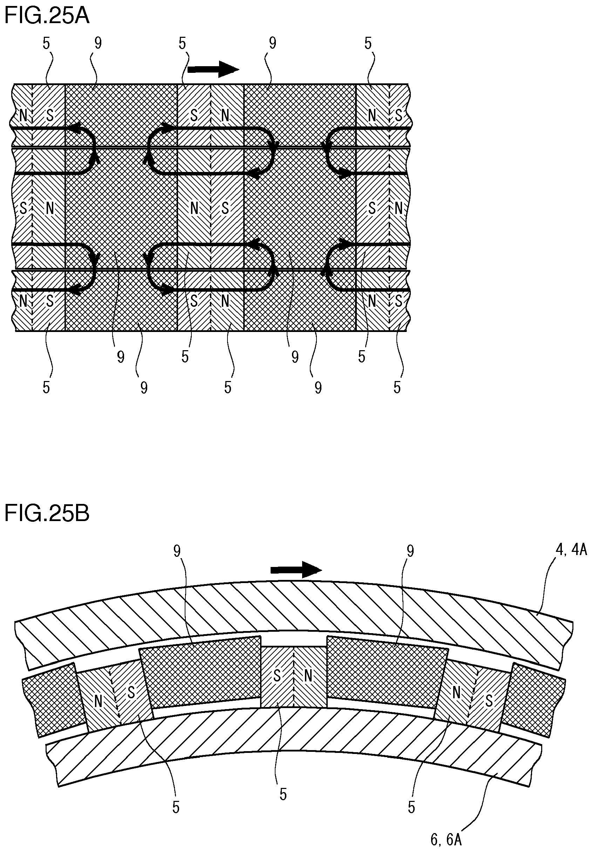

FIGS. 25A and 25B are cross-sectional views showing a state where no magnetic circuits are generated between the magnets and the heat generator by operation of the switching mechanism in the heat generating apparatus. FIGS. 24A and 25A are sectional views along the circumference, and FIGS. 24B and 25B are cross-sectional views showing the status of generation of magnetic circuits. The heat generating apparatus according to the eighth embodiment is a modification of the sixth embodiment. As compared with the sixth embodiment, the heat generating apparatus according to the eighth embodiment is the same in that the circumferential magnetic pole arrangement is employed but is different in the switching mechanism.

The heat generating apparatus according to the sixth embodiment includes a three-row rotation switching mechanism as the switching mechanism that switches between a state to generate magnetic circuits between the magnets and the heat generator and a state to generate no magnetic circuits between the magnets and the heat generator. Specifically, as shown in FIGS. 23 to 25B, the magnets 5, the pole pieces 9 and the magnet holding ring 6A are located inside the heat generating drum 4A at all times, and are not movable along the axis of the rotary shaft 3. The array of magnets 5 and pole pieces 9 is divided into three rows (a first row, a second row and a third row in this order), each of the rows extending in the circumferential direction along the circumference of the rotary shaft 3, and the magnet holding ring 6A is divided into three sections (a first section, a second section and a third section) for the first row, the second row and the third row, respectively. The first row of magnets 5 and pole pieces 9 and the first section of the magnet holding ring 6A, the second row of magnets 5 and pole pieces 9 and the second section of the magnet holding ring 6A, and the third row of magnets 5 and pole pieces 9 and the second section of the magnet holding ring 6A are independent of one another and are located with narrow gaps in between. The length (dimension in the axial direction along the axis of the rotary shaft 3) of the magnets 5 in the first and the third rows is nearly equal to a half of the length of the magnets 5 in the second row, and the length of the pole pieces 9 in the first and the third rows is nearly equal to a half of the length of the pole pieces 9 in the second row (see FIGS. 23, 24A and 25A).

Out of the first to the third sections of the magnetic holding ring 6A, the first and the third sections of the magnetic holding ring 6A for the first and the third rows are fixed to the body 2. The second section of the magnetic holding ring 6A for the second row is rotatable around the rotary shaft 3. For example, a drive source such as an air cylinder, an electric actuator or the like is connected to the second section of the magnetic holding ring 6A though it is not shown in the drawings. By operation of the drive source, the second section of the magnet holding ring 6A and the second row of magnets 5 and pole pieces 9 are rotated together. Thereby, the magnets 5 can be put into a state where magnets that have the same magnetic pole arrangement are positioned completely in alignment with one another in the axial direction along the axis of the rotary shaft 3 as three adjacent magnets 5 located in the first, the second and the third rows respectively (see FIG. 24A) and a state where magnets that each have a magnetic pole arrangement opposite to the magnetic pole arrangement of its adjacent magnet 5 are positioned completely in alignment with one another in the axial direction as three adjacent magnets 5 located in the first, the second and the third rows respectively (see FIG. 25A). Further, by controlling the degree of action of the drive source, the magnets 5 can be put into a state where magnets that have the same magnetic pole arrangement are positioned partly in alignment with one another in the axial direction as three adjacent magnets 5 located in the first, the second and the third rows respectively.

In the heat generating apparatus according to the eighth embodiment, the partition wall 15 (see FIG. 1) is interposed between the array of magnets 5 and pole pieces 9, and the heat generating drum 4A. In FIGS. 24A to 25B, however, the partition wall 15 is omitted.

In the eighth embodiment, when the three-row switching mechanism puts the magnets 5 into a state where magnets that each have a magnetic pole arrangement opposite to the magnetic pole arrangement of its adjacent magnet 5 are positioned completely in alignment with one another in the axial direction as three adjacent magnets 5 located in the first, the second and the third rows respectively, the magnetic fluxes from the magnets 5 (magnetic fields of the magnets 5) are as follows (see the solid arrows in FIG. 25A). As shown in FIG. 25A, the magnetic fluxes outgoing from the north poles of circumferentially adjacent magnets 5 in the same row repel each other in the pole piece 9 therebetween. The repelled magnetic fluxes reach the south poles of the adjacent magnets 5 in the next row through the pole piece 9 in the next row. Thus, the magnetic fluxes from the magnets 5 do not reach the heat generating drum 4A, and no magnetic circuits are generated between the magnets 5 and the heat generating drum 4A.

On the other hand, when the three-row switching mechanism puts the magnets 5 into a state where magnets that have the same magnetic pole arrangement are positioned completely in alignment with one another in the axial direction as three adjacent magnets 5 located in the first, the second and the third rows respectively, the magnetic fluxes from the magnets 5 (magnetic fields of the magnets 5) are as follows (see the solid arrows in FIGS. 24A and 24B). As shown in FIGS. 24A and 24B, the magnetic fluxes outgoing from the north poles of circumferentially adjacent magnets 5 repel each other and reach the heat generating drum 4A through the pole piece 9 therebetween. The magnetic fluxes that have reached the heat generating drum 4A reach the south poles of the magnets 5 via pole pieces 9 respectively adjacent thereto. Thus, magnetic circuits are generated in the same manner as in the sixth embodiment.

Therefore, the heat generating apparatus according to the eighth embodiment has the same effects as the heat generating apparatus according to the sixth embodiment.

### [Ninth Embodiment]

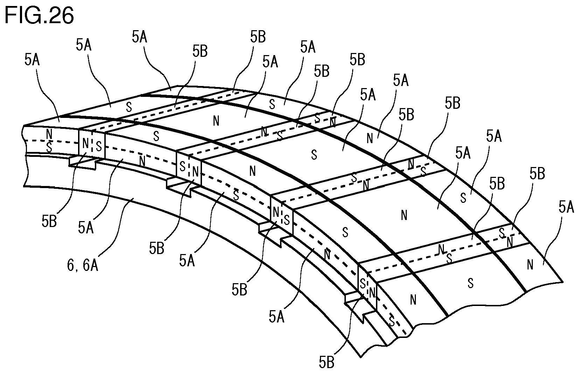

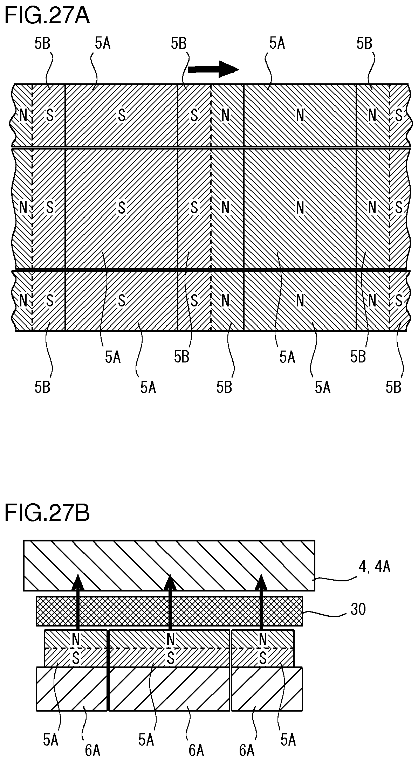

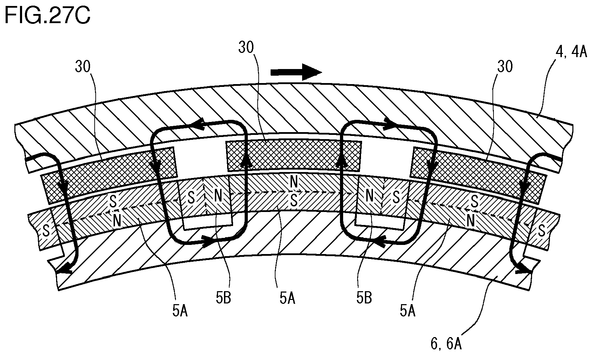

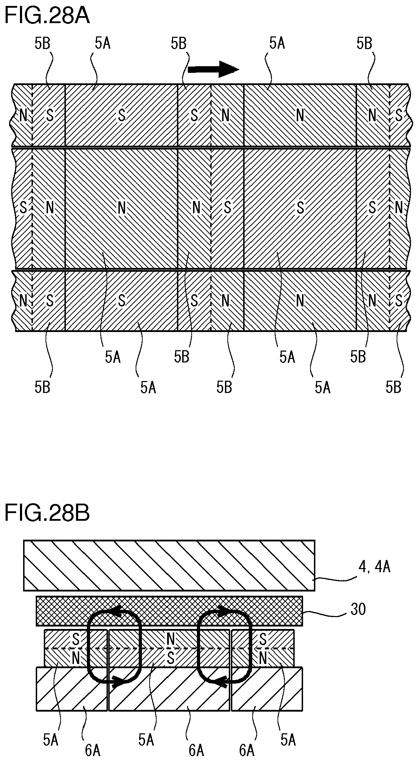

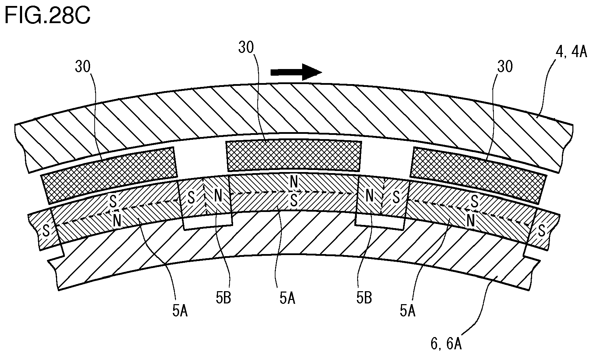

FIG. 26 is a perspective view showing the arrangement of magnets in a heat generating apparatus according to a ninth embodiment. FIGS. 27A to 27C are views showing a state where magnetic circuits are generated between the magnets and a heat generator by operation of a switching mechanism in the heat generating apparatus. FIGS. 28A to 28C are views showing a state where no magnetic circuits are generated between the magnets and the heat generator by operation of the switching mechanism in the heat generating apparatus. FIGS. 27A and 28A are sectional views along the circumference, FIG. 27B and 28B are longitudinal sectional views of the heat generating apparatus, and FIGS. 27C and 28C are cross-sectional views showing the status of generation of magnetic circuits. The heat generating apparatus according to the ninth embodiment is a modification of the seventh embodiment. As compared with the seventh embodiment, the heat generating apparatus according to the ninth embodiment is the same in that the two-directional magnetic pole arrangement is employed but is different in the switching mechanism.

The heat generating apparatus according to the ninth embodiment includes a three-row rotation switching mechanism as the switching mechanism that switches between a state to generate magnetic circuits between the magnets and the heat generator and a state to generate no magnetic circuits between the magnets and the heat generator. Specifically, as shown in FIGS. 26 to 28C, the magnets 5A and 5B and the magnet holding ring 6A are located inside the heat generating drum 4A at all times, and are not movable along the axis of the rotary shaft 3. The array of magnets 5A and 5B is divided into three rows (a first row, a second row and a third row in this order), each of the rows extending in the circumferential direction along the circumference of the rotary shaft 3, and the magnet holding ring 6A is divided into three sections (a first section, a second section and a third section) for the first row, the second row and the third row, respectively. The first row of magnets 5A and 5B and the first section of the magnet holding ring 6A, the second row of magnets 5A and 5B and the section of the magnet holding ring 6A, and the third row of magnets 5A and 5B and the third section of the magnet holding ring 6A are independent of one other and are located with narrow gaps in between. The length (dimension in the axial direction along the axis of the rotary shaft 3) of the magnets 5A in the first and the third rows is nearly equal to a half of the length of the magnets 5A in the second row, and the length of the magnets 5B in the first and the third rows is nearly equal to a half of the length of the magnets 5B in the second row (see FIGS. 26, 27A, 27B, 28A and 28B).

In the gap between the heat generating drum 4A (heat generator 4) and the primary magnets 5A, a plurality of ferromagnetic plate-shaped switches 30 are arrayed in the circumferential direction along the circumference of the rotary shaft 3 throughout the whole circumference. Unlike the array of magnets 5A and 5B and the magnet holding ring 6A, the array of switches 30 is not divided. The placement angles of the switches 30 are the same as the placement angles of the primary magnets 5A. Each of the switches 30 has the following dimensions. The dimension in the circumferential direction along the circumference of the rotary shaft 3 is nearly equal to that of each of the primary magnets 5 (see FIGS. 27C and 28C). The dimension in the axial direction along the axis of the rotary shaft 3 is nearly equal to the total of those of three adjacent primary magnets 5A in the first to the third rows (see FIGS. 27B and 28B).

Both sides of the respective switches 30 are held by a switch holding ring (not shown). The switch holding ring is in the shape of a cylinder that is coaxial with the rotary shaft 3, and is fixed to the body 2.

Out of the first to the third sections of the magnetic holding ring 6A, the first and the third sections of the magnetic holding ring 6A for the first and the third rows are fixed to the body 2. The second section of the magnetic holding ring 6A for the second row is rotatable around the rotary shaft 3. For example, a drive source such as an air cylinder, an electric actuator or the like is connected to the second section of the magnetic holding ring 6A though it is not shown in the drawings. By operation of the drive source, the second section of the magnet holding ring 6A and the second row of magnets 5A and 5B are rotated together. Thereby, the magnets 5A and 5B can be put into a state where magnets that have the same magnetic pole arrangement are positioned completely in alignment with one another in the axial direction along the axis of the rotary shaft 3 as three adjacent primary magnets 5A located in the first, the second and the third rows respectively and where magnets that have the same magnetic pole arrangement are positioned completely in alignment with one another in the axial direction as three adjacent secondary magnets 5B located in the first, the second and the third rows respectively (see FIGS. 27A and 27B) and a state where magnets that each have a magnetic pole arrangement opposite to the magnetic pole arrangement of its adjacent magnet are positioned completely in alignment with one another in the axial direction as three adjacent primary magnets 5A located in the first, the second and the third rows respectively and where magnets that each have a magnetic pole arrangement opposite to the magnetic pole arrangement of its adjacent magnet are positioned completely in alignment with one another in the axial direction as three adjacent secondary magnets 5B located in the first, the second and the third rows respectively (see FIGS. 28A and 28B). Further, by controlling the degree of action of the drive source, the magnets 5A and 5B can be put into a state where magnets that have the same magnetic pole arrangement are positioned partly in alignment with one another in the axial direction as three adjacent primary magnets 5A located in the first, the second and the third rows respectively and where magnets that have the same magnetic pole arrangement are positioned partly in alignment with one another in the axial direction as three adjacent secondary magnets 5B located in the first, the second and the third rows respectively.

In the heat generating apparatus according to the ninth embodiment, the partition wall 15 (see FIG. 1) is interposed between the array of magnets 5A and 5B, and the heat generating drum 4A. In FIGS. 27A to 28C, the partition wall 15 is omitted.

In the ninth embodiment, when the three-row switching mechanism puts the magnets 5A and 5B into a state where magnets that each have a magnetic pole arrangement opposite to the magnetic pole arrangement of its adjacent magnet are positioned completely in alignment with one another in the axial direction as three adjacent primary magnets 5A located in the first, the second and the third rows respectively and where magnets that each have a magnetic pole arrangement opposite to the magnetic pole arrangement of its adjacent magnet are positioned completely in alignment with one another in the axial direction as three adjacent secondary magnets 5B located in the first, the second and the third rows respectively, the magnetic fluxes from the magnets 5A and 5B (magnetic fields of the magnets 5A and 5B) are as follows (see the solid arrows in FIG. 28B). As shown in FIG. 28B, with regard to a first primary magnet 5A in the first row, a second primary magnet 5A in the second row and a third primary magnet in the third row that are adjacent to each other, for example, the magnetic flux outgoing from the north pole of the first primary magnet 5A flows along the switch 30 thereabove and reaches the south pole of the second primary magnet 5A. On the magnetic flux, the magnetic flux outgoing from the north pole of the secondary magnet 5B that is in contact with the first primary magnet 5A is superimposed. The magnetic flux outgoing from the north pole of the second primary magnet 5A reaches the south pole of the first primary magnet 5A through the magnet holding ring 6A. The same applies to the relationship between the second primary magnet 5A and the third primary magnet 5A. Thus, the magnetic fluxes from the magnets 5A and 5B do not reach the heat generating drum 4A, and no magnetic fields are generated between the magnets 5A and 5B and the heat generating drum 4A.

On the other hand, when the three-row switching mechanism puts the magnets 5A and 5B into a state where magnets that have the same magnetic pole arrangement are positioned completely in alignment with one another in the axial direction along the axis of the rotary shaft 3 as three adjacent primary magnets 5A located in the first, the second and the third rows respectively and where magnets that have the same magnetic pole arrangement are positioned completely in alignment with one another in the axial direction as three adjacent secondary magnets 5B located in the first, the second and the third rows respectively, the magnetic fluxes from the magnets 5A and 5B (magnetic fields of the magnets 5A and 5B) are as follows (see the solid arrows in FIGS. 27B and 27C). As shown in FIGS. 27A to 27C, with regard to a first primary magnet 5A and a second primary magnet 5A that are circumferentially adjacent to each other, the magnetic flux outgoing from the north pole of the first primary magnet 5A passes through the switch 30 thereabove and reaches the heat generating drum 4A. On the magnetic flux, the magnetic flux outgoing from the north pole of the secondary magnet 5B that is in contact with the first primary magnet 5A is superimposed. The magnetic flux that has reached the heat generating drum 4A reaches the south pole of the second primary magnet 5A through the adjacent switch 30. The magnetic flux outgoing from the north pole of the second primary magnet 5A reaches the south pole of the first primary magnet 5A via the magnet holding ring 6A. Thus, magnetic circuits are generated in the same manner as in the seventh embodiment.

Therefore, the heat generating apparatus according to the ninth embodiment has the same effects as the heat generating apparatus according to the seventh embodiment.

The present invention is not limited to the above-described embodiments, and various modifications are possible without departing from the spirit and scope thereof. For example, the single-row rotation switching mechanism employed in the fourth embodiment may be modified such that the magnet holding ring 6A is fixed to the body 2, while the switch holding ring holding the switches 30 is rotatable. In sum, it is required that either the magnet holding ring 6A or the array of switches 30 is rotatable around the rotary shaft 3.

The two-row rotation switching mechanism employed in the fifth to the seventh embodiments may be modified such that the second section of the magnet holding ring 6A is fixed to the body 2, while the first section of the magnet holding ring 6A is rotatable. In short, it is required that either the first section or the second section of the magnet holding ring 6A is rotatable around the rotary shaft 3.

The three-row rotation switching mechanism employed in the eighth and the ninth embodiments may be modified such that the second section of the magnet holding ring 6A is fixed to the body, while the first and the third sections of the magnet holding rings 6A are rotatable. In short, it is required that either the first and the third sections of the magnet holding rings 6A or the second section of the magnet holding ring 6A is rotatable around the rotary shaft 3.

In the above-described embodiments, the magnets 5 and the magnet holding ring 6A are surrounded by the heat generating drum 4A, and the magnets 5 face the inner peripheral surface of the heat generating drum 4A. However, the magnets 5 and the magnet holding ring 6A may be configured to surround the heat generating drum 4A, and the magnets 5 may face the outer peripheral surface of the heat generating drum 4A. In this case, the magnets 5 are held by the inner peripheral surface of the magnet holding ring 6A.

The heat generating apparatuses described above may be mounted not only in wind electric generating facilities but also in hydroelectric generating facilities and other power-generating facilities that utilize kinetic energy of a fluid.

Further, the heat generating apparatuses described above can be mounted in vehicles (for example, trucks, buses and the like). In such a case, any of the heat generating apparatuses may be provided in a vehicle as a component separate from an eddy current decelerator serving as an auxiliary brake or alternatively may be provided in a vehicle to double as an auxiliary brake. In a case where any of the heat generating apparatuses doubles as an auxiliary brake, a switch mechanism shall be provided for switching between braking and non-braking. When any of the heat generating apparatuses is used as an auxiliary brake (decelerator), the apparatus reduces the rotational speeds of the rotary shafts such as the propeller shaft, the drive shaft and the like. Thereby, the running speed of the vehicle is controlled. In this regard, along with the generation of braking force to reduce the rotational speeds of the rotary shafts, heat is generated. The heat recovered by the heat generating apparatus mounted in the vehicle is utilized, for example, as a heat source for a heater for heating the inside of the vehicle or as a heat source for a refrigerator for refrigerating the inside of a container.

### INDUSTRIAL APPLICABILITY

The eddy current heat generating apparatuses according to the present invention can be effectively employed in power-generating facilities utilizing kinetic energy of a fluid, such as wind electric generating facilities, hydroelectric generating facilities and the like, and in vehicles, such as trucks, busses and the like.

### LIST OF REFERENCE SYMBOLS

1: eddy current heat generating apparatus
2: body
3: rotary shaft
4: heat generator
4A: heat generating drum
4B: connection member
4a: base
4b: first layer
4c: second layer
4d: oxidation resistant coating
4e: buffer layer
5, 5A, 5B: permanent magnet
6A: magnet holding ring
7: bearing
8: cover
9, 10: pole piece
11: inlet
12: outlet
15: partition wall
15a: disk
20: propeller
23: clutch
24: accelerator
30: plate-shaped switch

## Claims

1. An eddy current heat generating apparatus comprising:
a rotary shaft rotatably supported by a non-rotative member;
a cylindrical heat generator fixed to the rotary shaft;
a plurality of permanent magnets arrayed in a circumferential direction along a circumference of the rotary shaft to face an outer peripheral surface or an inner peripheral surface of the heat generator with a gap such that magnetic pole arrangements of circumferentially adjacent ones of the permanent magnets are opposite to each other;
a cylindrical magnet holder holding the permanent magnets;
a switching mechanism that switches between a state to generate magnetic circuits between the permanent magnets and the heat generator and a state to generate no magnetic circuits between the permanent magnets and the heat generator; and
a heat recovery system collecting heat generated in the heat generator.

2. The eddy current heat generating apparatus according to claim 1, wherein:
each of the permanent magnets is laid such that magnetic poles thereof are arranged in a radial direction from an axis of the rotary shaft;
the magnet holder is ferromagnetic; and
the switching mechanism is configured to move the magnet holder in an axial direction along the axis of the rotary shaft.

3. The eddy current heat generating apparatus according to claim 1, wherein:
each of the permanent magnets is laid such that magnetic poles thereof are arranged in the circumferential direction along the circumference of the rotary shaft, pole pieces being provided between the circumferentially arrayed permanent magnets;
the magnet holder is non-magnetic; and
the switching mechanism is configured to move the magnet holder in an axial direction along the axis of the rotary shaft.

4. The eddy current heat generating apparatus according to claim 1, wherein:
the permanent magnets include primary magnets each of which is laid such that magnetic poles thereof are arranged in a radial direction from an axis of the rotary shaft, and secondary magnets each of which is laid such that magnetic poles thereof are arranged in the circumferential direction along the circumference of the rotary shaft, the secondary magnets being provided between the circumferentially arrayed primary magnets;
the magnetic holder is ferromagnetic; and
the switching mechanism is configured to move the magnet holder in an axial direction along the axis of the rotary shaft.

5. The eddy current heat generating apparatus according to claim 1, wherein:
each of the permanent magnets is laid such that magnetic poles thereof are arranged in a radial direction from an axis of the rotary shaft;
the magnetic holder is ferromagnetic;
the switching mechanism includes a plurality of ferromagnetic plate-shaped switches arrayed in the circumferential direction along the circumference of the rotary shaft at placement angles where the permanent magnets are placed; and
the switching mechanism is configured to rotate either the magnetic holder or the array of plate-shaped switches around the rotary shaft.

6. The eddy current heat generating apparatus according to claim 5, wherein:
as the switching mechanism, the array of permanent magnets is divided into two rows, each of the rows extending in the circumferential direction along the circumference of the rotary shaft, and the magnet holder is divided into two sections for the respective rows of permanent magnets; and
the switching mechanism is configured to rotate either one of the two sections of the magnet holder around the rotary shaft, rather than to rotate either the magnet holder or the array of plate-shaped switches around the rotary shaft.

7. The eddy current heat generating apparatus according to claim 1, wherein:
each of the permanent magnets is laid such that magnetic poles thereof are arranged in the circumferential direction along the circumference of the rotary shaft, pole pieces being provided between the circumferentially arrayed permanent magnets;
the magnet holder is non-magnetic;
as the switching mechanism, the array of permanent magnets and pole pieces is divided into two rows, each of the rows extending in the circumferential direction along the circumference of the rotary shaft, and the magnet holder is divided into two sections for the respective rows of permanent magnets and pole pieces; and
the switching mechanism is configured to rotate either one of the two sections of the magnet holder around the rotary shaft.

8. The eddy current heat generating apparatus according to claim 1, wherein:
the permanent magnets include primary magnets each of which is laid such that magnetic poles thereof are arranged in a radial direction from an axis of the rotary shaft, and secondary magnets each of which is laid such that magnetic poles thereof are arranged in the circumferential direction along the circumference of the rotary shaft, the secondary magnets being provided between the circumferentially arrayed primary magnets;
the magnetic holder is ferromagnetic;
as the switching mechanism, the array of permanent magnets is divided into two rows, each of the rows extending in the circumferential direction along the circumference of the rotary shaft, and the magnet holder is divided into two sections for the respective rows of permanent magnets;
the switching mechanism includes a plurality of ferromagnetic plate-shaped switches arrayed in the circumferential direction along the circumference of the rotary shaft throughout the whole circumference at placement angles where the primary magnets are placed; and
the switching mechanism is configured to rotate either one of the two sections of the magnet holder around the rotary shaft.

9. The eddy current heat generating apparatus according to claim 7, wherein:
as the switching mechanism, the array of permanent magnets and pole pieces is divided into a first row, a second row and a third row in this order, each of the rows extending in the circumferential direction along the circumference of the rotary shaft, rather than into two rows, each of the rows extending in the circumferential direction along the circumference of the rotary shaft, and the magnet holder is divided into a first section, a second section and a third section for the first row of permanent magnets and pole pieces, for the second row of permanent magnets and pole pieces and for the third row of permanent magnets and pole pieces, respectively, rather than into two sections for the respective rows of permanent magnets and pole pieces; and
the switching mechanism is configured to rotate either the first and the third sections of the magnet holder or the second section of the magnet holder around the rotary shaft, rather than to rotate either one of the two sections of the magnet holder around the rotary shaft.

10. The eddy current heat generating apparatus according to claim 8, wherein:
as the switching mechanism, the array of permanent magnets is divided into a first row, a second row and a third row in this order, each of the rows extending in the circumferential direction along the circumference of the rotary shaft, rather than into two rows, each of the rows extending in the circumferential direction along the circumference of the rotary shaft, and the magnet holder is divided into a first section for the first row of permanent magnets, a second section for the second row of permanent magnets, and a third section for the third row of permanent magnets, rather than into two sections for the respective rows of permanent magnets; and
the switching mechanism is configured to rotate either the first and the third sections of the magnet holder or the second section of the magnet holder around the rotary shaft, rather than to rotate either one of the two sections of the magnet holder around the rotary shaft.

11. The eddy current heat generating apparatus according to any one of claims 1 to 10, wherein:
the recovery system includes:
a closed container that is fixed to the non-rotative member and surrounds the heat generator, the closed container including a non-magnetic partition wall located in the gap between the heat generator and the permanent magnets;
pipes connected to an inlet and an outlet, respectively, leading to an internal space of the closed container; and
a heat storage device connected to the pipes; and
a heat medium circulating in the closed container, the pipes and the heat storage device.
